# EUROPEAN PATENT SPECIFICATION

(11) **EP 4 456 408 B1**
(45) Date of publication and mention of the grant of the patent: **05.11.2025**
(21) Application number: 21968847.0
(22) Date of filing: 21.12.2021
(51) Int. Cl.: H02P 6/12, H02P 29/024

(54) **MOTOR CONTROL DEVICE AND ELECTRIC POWER STEERING DEVICE**
MOTORSTEUERUNGSVORRICHTUNG UND ELEKTRISCHE SERVOLENKVORRICHTUNG
DISPOSITIF DE COMMANDE DE MOTEUR ET DISPOSITIF DE DIRECTION À ASSISTANCE ÉLECTRIQUE

(43) Date of publication of application: 30.10.2024
(73) Proprietor: MITSUBISHI ELECTRIC CORPORATION, Chiyoda-ku Tokyo 100-8310 (JP)
(72) Inventor: FUNAKOSHI, Masayuki, Tokyo 100-8310 (JP); KUNIMITSU, Takahiro, Tokyo 100-8310 (JP); OGAWA, Kenji, Tokyo 100-8310 (JP); KOZUKI, Hiroyuki, Tokyo 100-8310 (JP); YAGIHARA, Takashi, Tokyo 100-8310 (JP); KIMURA, Takuya, Tokyo 100-8310 (JP); OGIWARA, Kento, Tokyo 100-8310 (JP); MATSUSHITA, Masaki, Tokyo 100-8310 (JP)
(74) Representative: Hoffmann Eitle
(86) International application number: PCT/JP2021/047287
(87) International publication number: WO 2023/119410

(56) References cited:
- GB-A- 2 204 006
- JP-A- 2008 220 155
- JP-A- 2016 001 953
- JP-A- 2019 161 994
- JP-A- 2021 035 075
- US-A- 5 927 430
- US-A1- 2014 229 074
- US-A1- 2019 039 644

## Description

### [Technical Field]

The present disclosure relates to a motor control device and an electric power steering device.

### [Background Art]

An electric power steering device which includes a motor control device that has a main control unit and an auxiliary control unit is disclosed in Patent Document 1. As such, by adopting a double redundant control system, it is possible to continue motor control even when an abnormality occurs in one control unit of the control system.

### [Citation List]

### [Patent Document]

[Patent Document 1] Published Japanese Translation No. 2021-508635 of the PCT International Publication
From US 2014/0229074 A1, which discloses the features of the preamble of claim 1, an electronic control apparatus is known, including a control unit, a plurality of power supply units for supplying the control unit with power, and a power supply fault detector unit for detecting a fault in the plurality of power supply units. The control unit operates in a normal mode on electric power supplied from the plurality of power supply units when none of the plurality of power supply units is faulty.

From US 2019/0039644 A1 an electronic control unit is known, having a first group of modules with a high probability of failure and a second group of modules with a low probability of failure. The main modules are arranged on a main control path and the secondary modules are respectively arranged on a secondary control path. Each of these control paths ultimately produces a control signal, i.e., a main control signal and a secondary control signal. A multiplexer is used to decide which of these two control signals is forwarded to modules from the second group. This second group of modules is implemented only once and not present in redundant form.

From GB 2 204 006 A a steering| power assist control means is known, comprising a main assist control means and an auxiliary assist control means. When.an abnormality occurrence signal from the main assist control means is inputted to an abnormality state detection and changing decision circuit 134, a selector circuit changes the PWM signal from the main assist control means side to the: auxiliary assist control means side and outputs the PWM signal to a motor drive circuit. When the main assist control means fails, the auxiliary assist control means 132 immediately takes over the main assist control-means to provide, if the operation condition permits, a continued steering power assist control.

From JP 2008 220 155 A a motor control device and an electric power steering device are known, having a fault monitoring unit that checks whether three-phase current values detected by a current sensor are within a normal range, and determines whether the current sensor is operating normally or has a fault.

From US 5,927,430 an electric power steering apparatus is known, wherein a faulty sensor identification information makes a target current correcting section to acknowledge a motor current detector or a motor voltage detector 29 to be in an abnormally operating condition.

### [Summary of Invention]

### [PROBLEM TO BE SOLVED BY THE INVNETION]

Since the main control unit and the auxiliary control unit share a pre-driver in the motor control device disclosed in Patent Document 1, when an abnormality occurs in the pre-driver, there is a possibility that the motor is not being adequately controlled.

The present disclosure has been made in order to address the problem above, and an object is to provide a motor control device and an electric power steering device by that are more stable against abnormality occurrences.

### [MEANS TO SOLVE THE PROBLEM]

A motor control device according to the present invention is defined in the appended claim 1. Embodiments of the invention according to claim 1 are given in the claims depending on claim 1.

An electric power steering device according to the present invention is defined in the appended claim 7. Embodiments of the invention according to claim 7 are given in the claims depending on claim 7.

### [EFFECTS OF THE INVENTION]

According to the present disclosure, it is possible to provide a motor control device and an electric power steering device that are more stable against abnormality occurrences.

### [Brief Description of Drawings]

[FIG. 1] A block diagram showing an overall configuration of a motor control device according to a first embodiment.
[FIG. 2] A block diagram showing an overall configuration of the motor control device according to a second embodiment.
[FIG. 3] A block diagram showing an overall configuration of the motor control device according to a third embodiment.
[FIG. 4] A block diagram showing an overall configuration of the motor control device according to a fourth embodiment.
[FIG. 5] A block diagram showing an overall configuration of the motor control device according to a fifth embodiment.
[FIG. 6] A block diagram showing an overall configuration of the motor control device according to a seventh embodiment.

### [Description of Embodiments]

Hereinafter, configurations of the present disclosure are explained with reference to the drawings. The scope of the present disclosure is not limited to the embodiments below, and may be changed so long as the embodiments do not depart from the technical scope of the present disclosure.

### First Embodiment

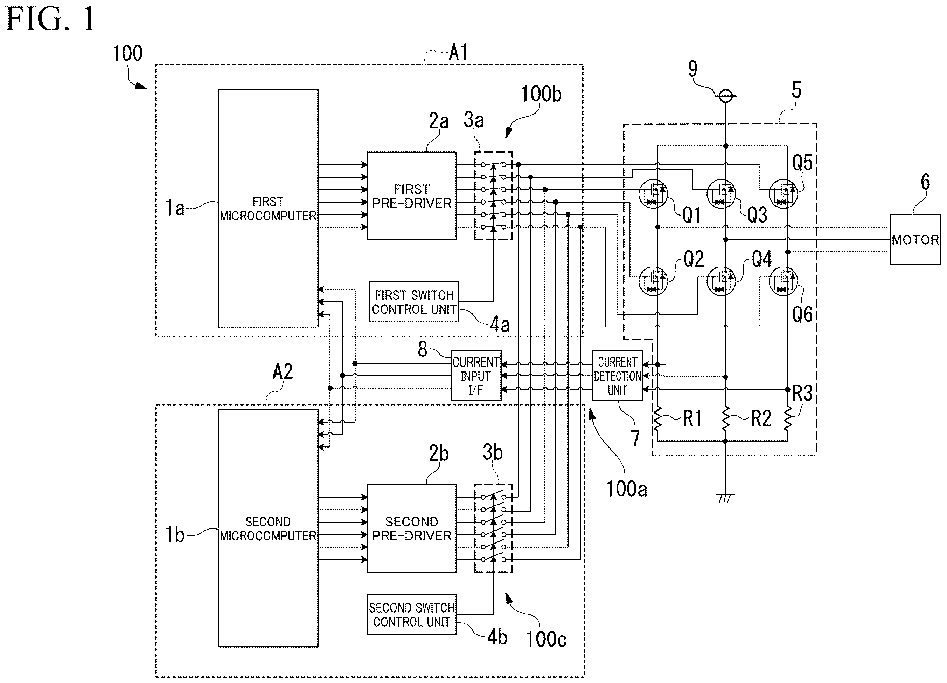

As shown in FIG. 1, a motor control device 100 according to a first embodiment includes a main control unit A1, an auxiliary control unit A2, a motor drive circuit 5, a current detection unit 7, and a current input I/F 8. In the present description, "I/F" stands for "interface".

The motor control device 100 is configured as a double redundant control system that includes a first control system (main control unit A1) and a second control system (auxiliary control unit A2). The motor control device 100 is an example of a part of an electric power steering device mounted on an automobile. The motor control device 100 controls the motor 6 that is included by the electric power steering device. The motor 6 is connected to a steering system not shown on the drawings.

As shown in FIG. 1, the main control unit A1 includes a first microcomputer 1a, a first pre-driver 2a, a first signal cut off switch 3a and a first switch control unit 4a. The auxiliary control unit A2 includes a second microcomputer 1b, a second pre-driver 2b, a second signal cut off switch 3b and a second switch control unit 4b. The first microcomputer 1a corresponds to a first control signal generator, and the second microcomputer 1b corresponds to a second control signal generator. The first pre-driver 2a corresponds to a first drive signal generator, and the second pre-driver 2b corresponds to a second drive signal generator.

The motor drive circuit 5 includes six switching transistors Q1 to Q6, and three shunt resistors R1 to R3. Switching transistors Q1 to Q6 are types of switching elements. A switching element other than a switching transistor may be used. The motor drive circuit 5 is configured to drive the motor 6 by having the plurality of switching transistors Q1 to Q6 switch between supply and cut off of a drive current to the motor 6.

The motor 6 includes three input terminals (U phase input terminal, V phase input terminal, and a W phase input terminal). The motor drive circuit 5 inputs three phase drive currents (U phase drive current, V phase drive current, and W phase drive current) into each of the input terminals of the motor 6. As such, the motor 6 is driven. In other words, the motor 6 in the present embodiment is a three phase direct current electric motor.

The motor 6 is a generating source of an assist torque to assist steering of an operator operating an automobile. In other words, the motor 6 conducts assistance so as to allow for steering using a smaller steering torque when the operator is steering the automobile.

The first microcomputer 1a generates six gate control signals based on a control program that is stored in advance. The first microcomputer 1a is an integrally formed chip, having a memory unit which stores the control program, a calculation unit that executes calculations, and the like based on the control program. The first microcomputer 1a includes at least six output terminals, and at least three input terminals. It is possible to change a number of input terminals and the number of output terminals in the various components as necessary. Output terminals or input terminals that are not connected to any components may exist.

The six output terminals that are included in the first microcomputer 1a are connected to the first pre-driver 2a. The first microcomputer 1a outputs the six gate control signals to the first pre-driver 2a via the six output terminals. The three input terminals that are included in the first microcomputer 1a are connected to the current input I/F 8. Current detection signals that correspond to three phases (U phase, V phase, and W phase) are input to the first microcomputer 1a from the current input I/F 8 via the three input terminals.

The six gate control signals mentioned above correspond to the six switching transistors Q1 to Q6 in the motor drive circuit 5. Hereinafter, a control signal corresponding to the switching transistor Q1 is referred to as "gate control signal S1", a control signal corresponding to the switching transistor Q2 is referred to as "gate control signal S2", a control signal corresponding to the switching transistor Q3 is referred to as "gate control signal S3", a control signal corresponding to the switching transistor Q4 is referred to as "gate control signal S4", a control signal corresponding to the switching transistor Q5 is referred to as "gate control signal S5", and a control signal corresponding to the switching transistor Q6 is referred to as "gate control signal S6".

The first pre-driver 2a is a gate driver that generates six gate signals Sg1 to Sg6 based on the six gate control signals S1 to S6. The first pre-driver 2a may be a single IC (Integrated Circuit). Voltages of the gate control signals S1 to S6 that the first microcomputer 1a generates are not enough to operate the switching transistors Q1 to Q6. As such, the first pre-driver 2a generates the gate signals Sg1 to Sg6 that have enough voltages to operate the switching transistors Q1 to Q6, based on the gate control signals S1 to S6. Each of the gate signals Sg1 to Sg6 corresponds to each of the gate control signals S1 to S6.

As shown in FIG. 1, the first pre-driver 2a includes six input terminals and six output terminals. Each of the six input terminals is connected to each of the six output terminals in the first microcomputer 1a, and each of the gate control signals S1 to S6 is received therefrom. Each of the six output terminals is connected to the first signal cut off switch 3a, and a corresponding gate signal Sg1 to Sg6 is output to the first signal cut off switch 3a.

The first signal cut off switch 3a includes six on/off switches that correspond to each of the gate signals Sg1 to Sg6. The first signal cut off switch 3a includes six input terminals and six output terminals that correspond to each on/off switch. The first signal cut off switch 3a also includes one control input terminal. Each of the six input terminals in the first signal cut off switch 3a is connected to each of the output terminals in the first pre-driver 2a, and is input into each of the gate signals Sg1 to Sg6.

The six output terminals in the first signal cut off switch 3a are connected to the motor drive circuit 5. The first signal cut off switch 3a outputs the six gate signals Sg1 to Sg6 to the motor drive circuit 5 via the six output terminals. The one control input terminal in the first signal cut off switch 3a is connected to the first switch control unit 4a. The first switch control unit 4a inputs a first switching signal to the first signal cut off switch 3a via the one control input terminal mentioned above.

The first signal cut off switch 3a switches between the on/off states of the six on/off switches, based on the first switching signal. As such, the first signal cut off switch 3a is a changeover switch that switches an output state (output/no output) of the gate signals Sg1 to Sg6 from the main control unit A1 to the motor drive circuit 5, based on the first switching signal.

The first switch control unit 4a is a signal generating circuit that generates the first switching signal of the first signal cut off switch 3a, and includes one output terminal. The first switch control unit 4a outputs the first switching signal to the control input terminal of the first signal cut off switch 3a.

The second microcomputer 1b generates the six gate control signals S1 to S6 to control the motor 6 based on the control program that is stored in advance. The second microcomputer 1b is an integrally formed chip, having a memory unit which stores the control program, a calculation unit that executes calculations, and the like based on the control program. The control program of the second microcomputer 1b is the same as the control program of the first microcomputer 1a. The second microcomputer 1b includes at least six output terminals, and at least three input terminals.

The six output terminals that are included in the second microcomputer 1b are connected to the second pre-driver 2b. The second microcomputer 1b outputs the six gate control signals S1 to S6 to the second pre-driver 2b via the six output terminals. The three input terminals that are included in the second microcomputer 1b are connected to the current input I/F 8. The current detection signals that correspond to three phases (U phase, V phase, and W phase) are input to the second microcomputer 1b from the current input I/F 8 via the three input terminals.

The second pre-driver 2b is a gate driver that generates the six gate signals Sg1 to Sg6 based on the six gate control signals S1 to S6. The second pre-driver 2a may be a single IC (Integrated Circuit). Voltages of the gate control signals S1 to S6 that the second microcomputer 1b generates are not enough to operate the switching transistors Q1 to Q6. As such, the second pre-driver 2b generates the gate signals Sg1 to Sg6 that have enough voltages to operate the switching transistors Q1 to Q6, based on the gate control signals S1 to S6.

The second pre-driver 2b includes six input terminals and six output terminals. Each of the six input terminals is connected to each of the six output terminals in the second microcomputer 1b, and each of the gate control signals S1 to S6 is received therefrom. Each of the six output terminals is connected to the second signal cut off switch 3b, and a corresponding gate signal Sg1 to Sg6 is output to the second signal cut off switch 3b.

The second signal cut off switch 3b includes six on/off switches that correspond to each of the gate signals Sg1 to Sg6. The second signal cut off switch 3b includes six input terminals and six output terminals that correspond to each on/off switch. The second signal cut off switch 3b also includes one control input terminal. Each of the six input terminals in the second signal cut off switch 3b is connected to each of the output terminals in the second pre-driver 2b, and is input into each of the gate signals Sg1 to Sg6.

The six output terminals in the second signal cut off switch 3b are connected to the motor drive circuit 5. The second signal cut off switch 3b outputs the six gate signals Sg1 to Sg6 to the motor drive circuit 5 via the six output terminals. The one control input terminal in the second signal cut off switch 3b is connected to the second switch control unit 4b. The second switch control unit 4b inputs a second switching signal to the second signal cut off switch 3b via the one control input terminal mentioned above.

The second signal cut off switch 3b switches between the on/off states of the six on/off switches, based on the second switching signal. As such, the second signal cut off switch 3b is a changeover switch that switches an output state (output/no output) of the gate signals Sg1 to Sg6 from the auxiliary control unit A2 to the motor drive circuit 5, based on the second switching signal.

The second switch control unit 4b is a signal generating circuit that generates the second switching signal of the second signal cut off switch 3b, and includes one output terminal. The second switch control unit 4b outputs the second switching signal to the control input terminal of the second signal cut off switch 3b.

Each of the six output terminals in the second signal cut off switch 3b are connected to each of the corresponding output terminals in the first signal cut off switch 3a. **In** other words, the main control unit A1 and the auxiliary control unit A2 are connected to the motor drive circuit 5 so that the gate signals Sg1 to Sg6 are input to the motor drive circuit 5 from either of the main control unit A1 or the auxiliary control unit A2.

When the main control unit A1 is operating, the six gate signals Sg1 to Sg6 from the first signal cut off switch 3a are input to the motor drive circuit 5. When the auxiliary control unit A2 is operating, the six gate signals Sg1 to Sg6 from the second signal cut off switch 3b are input to the motor drive circuit 5.

The motor drive circuit 5 is a three phase inverter that includes three switching legs, each corresponding to a U phase, a V phase, and a W phase. Hereinafter, a switching leg corresponding to the U phase is referred to as a "U phase leg", a switching leg corresponding to the V phase is referred to as a "V phase leg", and a switching leg corresponding to the W phase is referred to as a "W phase leg". The motor drive circuit 5 is controlled based on the six gate signals Sg1 to Sg6 that are input from either of the main control A1 or from the auxiliary control A2. The motor drive circuit 5 converts a direct current of a predetermined voltage (typically 12V) supplied from a battery 9 of the automobile to three phases, U phase, V phase, and W phase of an alternating current power, and outputs the aforementioned to the motor 6.

The U phase leg includes the switching transistor Q1 that configures an upper arm, the switching transistor Q2 that configures a lower arm, and the shunt resistor R1.

The switching transistor Q1 is an MOS transistor, and includes a gate terminal, a source terminal and a drain terminal. The gate terminal of the switching transistor Q1 is connected to the output terminal of the first signal cut off switch 3a and the output terminal of the second signal cut off switch 3b. The gate terminal of the switching transistor Q1 is input to either of the first signal cut off switch 3a or the second signal cut off switch 3b from the gate signal Sg1.

The source terminal of the switching transistor Q1 is connected to the drain terminal of the switching transistor Q2 and the U phase input terminal of the motor 6. The drain terminal of the switching transistor Q1 is connected to an external battery 9.

The switching transistor Q2 is an MOS transistor, and includes a gate terminal, a source terminal and a drain terminal. The gate terminal of the switching transistor Q2 is connected to the output terminal of the first signal cut off switch 3a and the output terminal of the second signal cut off switch 3b. The gate terminal of the switching transistor Q2 is input to either of the first signal cut off switch 3a or the second signal cut off switch 3b from the gate signal Sg2.

The source terminal of the switching transistor Q2 is connected to an end of the shunt resistor R1 and to the current detection unit 7. The drain terminal of the switching transistor Q2 is connected to the source terminal of the switching transistor Q1 and to the U phase input terminal of the motor 6.

The shunt resistor R1 is connected in series to the switching transistor Q1 of the upper arm and the switching transistor Q2 of the lower arm. An end of the shunt resistor R1 is connected to the source terminal of the switching transistor Q2 and the current detection unit 7, and another end is connected to the ground (reference potential). A drop in voltage corresponding to the U phase drive current is generated at the shunt resistor R1. The current detection unit 7 obtains a U phase detected voltage corresponding to the U phase drive current, based on the voltage drop at the shunt resistor R1.

The V phase leg includes the switching transistor Q3 that configures an upper arm, the switching transistor Q4 that configures a lower arm, and the shunt resistor R2.

The switching transistor Q3 is an MOS transistor, and includes a gate terminal, a source terminal and a drain terminal. The gate terminal of the switching transistor Q3 is connected to the output terminal of the first signal cut off switch 3a and the output terminal of the second signal cut off switch 3b. The gate terminal of the switching transistor Q3 is input to either of the first signal cut off switch 3a or the second signal cut off switch 3b from the gate signal Sg3.

The source terminal of the switching transistor Q3 is connected to the drain terminal of the switching transistor Q4 and the U phase input terminal of the motor 6. The drain terminal of the switching transistor Q3 is connected to the external battery 9.

The switching transistor Q4 is an MOS transistor, and includes a gate terminal, a source terminal and a drain terminal. The gate terminal of the switching transistor Q4 is connected to the output terminal of the first signal cut off switch 3a and the output terminal of the second signal cut off switch 3b. The gate terminal of the switching transistor Q4 is input to either of the first signal cut off switch 3a or the second signal cut off switch 3b from the gate signal Sg4.

The source terminal of the switching transistor Q4 is connected to an end of the shunt resistor R2 and to the current detection unit 7. The drain terminal of the switching transistor Q4 is connected to the source terminal of the switching transistor Q3 and to the V phase input terminal of the motor 6.

The shunt resistor R2 is connected in series to the switching transistor Q3 of the upper arm and the switching transistor Q4 of the lower arm. An end of the shunt resistor R2 is connected to the source terminal of the switching transistor Q4 and the current detection unit 7, and another end is connected to the ground (reference potential). A drop in voltage corresponding to the V phase drive current is generated at the shunt resistor R2. The current detection unit 7 obtains a V phase detected voltage corresponding to the V phase drive current, based on the voltage drop at the shunt resistor R2.

The W phase leg includes the switching transistor Q5 that configures an upper arm, the switching transistor Q6 that configures a lower arm, and the shunt resistor R3.

The switching transistor Q5 is an MOS transistor, and includes a gate terminal, a source terminal and a drain terminal. The gate terminal of the switching transistor Q5 is connected to the output terminal of the first signal cut off switch 3a and the output terminal of the second signal cut off switch 3b. The gate signal Sg5 is input to the gate terminal of the switching transistor Q5 from the first signal cut off switch 3a or the second signal cut off switch 3b.

The source terminal of the switching transistor Q5 is connected to the drain terminal of the switching transistor Q6 and the W phase input terminal of the motor 6. The drain terminal of the switching transistor Q5 is connected to the external battery 9.

The switching transistor Q6 is an MOS transistor, and includes a gate terminal, a source terminal and a drain terminal. The gate terminal of the switching transistor Q6 is connected to the output terminal of the first signal cut off switch 3a and the output terminal of the second signal cut off switch 3b. The gate signal Sg6 is input to the gate terminal of the switching transistor Q6 from the first signal cut off switch 3a or the second signal cut off switch 3b.

The source terminal of the switching transistor Q6 is connected to an end of the shunt resistor R3 and to the current detection unit 7. The drain terminal of the switching transistor Q6 is connected to the source terminal of the switching transistor Q5 and to the W phase input terminal of the motor 6.

The shunt resistor R3 is connected in series to the switching transistor Q5 of the upper arm and the switching transistor Q6 of the lower arm. An end of the shunt resistor R3 is connected to the source terminal of the switching transistor Q6 and the current detection unit 7, and another end is connected to the ground (reference potential). A drop in voltage corresponding to the W phase drive current is generated at the shunt resistor R3. The current detection unit 7 obtains a W phase detected voltage corresponding to the W phase drive current, based on the voltage drop at the shunt resistor R3.

The current detection unit 7 detects the U phase drive current, the V phase drive current, and the W phase drive current based on a U phase detection voltage, a V phase detection voltage, and a W phase detection voltage. Drive currents of various phases detected by the current detection unit 7 in the present description are collectively referred to as "detected currents". The current detection unit 7 includes three input terminals and three output terminals. Each of the three input terminals of the current detection unit 7 are connected to ends of the shunt resistors R1 to R3, and each of the U phase detected voltage, the V phase detected voltage, and the W phase detected voltage is input thereto. Each of the three output terminals in the current detection unit 7 are connected to the current input I/F 8.

The current input I/F 8 is provided between the current detection unit 7 and the microcomputers 1a, 1b, and includes three input terminals and three output terminals. The three input terminals in the current input I/F 8 are connected to the three output terminals of the current detection unit 7. The detected currents related to the U phase drive current, the V phase drive current, and the W phase drive current from the current detection unit 7 are input to each of the three input terminals of the current input I/F 8.

The current input I/F 8 generates a U phase conversion current signal, a V phase conversion current signal, and a W phase conversion current signal that correspond to each of the detected currents of the U phase drive current, the V phase drive current and the W phase drive current. The aforementioned signals that are generated by the current input I/F 8 in the present description are collectively referred to as the "current detection signal". In other words, the current input I/F 8 is an interface circuit that generates the current detection signal, which is a digital signal, based off of the detected current that is detected by the current detection unit 7, which is an analog value.

The three output terminals in the current input I/F 8 are connected to each of the three input terminals in each of the microcomputers 1a and 1b. The current input I/F 8 outputs the U phase conversion current signal, the V phase conversion current signal, and the W phase conversion current signal to the microcomputers 1a and 1b via the three output terminals.

Although not shown in FIG. 1, a power supply circuit to conduct voltage conversion is connected to the battery 9. The main control unit A1, the auxiliary control unit A2, the current detection unit 7, and the current input I/F 8 operate by a power supply voltage (for example, 5V) supplied by the above power supply circuit.

The first signal cut off switch 3a and the first switch control unit 4a configure a first switcher 100b, and the second signal cut off switch 3b and the second switch control unit 4b configure a second switcher 100c. The current detection unit 7 and the current input I/F 8 configure a drive current detector 100a.

Next, an operation of a motor control device 100 and an electric power steering device according to the first embodiment having the aforementioned configuration is explained.

The first microcomputer 1a calculates target values (target current values) of the U phase drive current, the V phase drive current, and the W phase drive current that flow to the motor 6, in the main control unit A1. The current detection unit 7 detects the U phase drive current, the V phase drive current, and the W phase drive current that actually flow to the motor 6 as the detected currents, and outputs the detected currents to the first microcomputer 1a via the current input I/F 8. The first microcomputer 1a generates the control signals S1 to S6 so that the aforementioned target currents and the detected currents match, and outputs the generated control signals to the first pre-driver 2a.

The first pre-driver 2a generates the gate signals Sg1 to Sg6 based on the aforementioned gate control signals S1 to S6, and outputs the generated gate signals to the motor drive circuit 5 via the first signal cut off switch 3a. By supplying the U phase drive current, the V phase drive current, and the W phase drive current to the motor 6 based on the gate signals Sg1 to Sg6, the motor drive circuit 5 rotationally drives the motor 6.

The second microcomputer 1b calculates target values (target current values) of the U phase drive current, the V phase drive current, and the W phase drive current that flow to the motor 6, in the auxiliary control unit A2. The current detection unit 7 detects the U phase drive current, the V phase drive current, and the W phase drive current that actually flow to the motor 6 as the detected currents, and outputs the detected currents to the second microcomputer 1b via the current input I/F 8. The second microcomputer 1b generates the control signals S1 to S6 so that the aforementioned target currents and the detected currents match, and outputs the generated control signals to the second pre-driver 2b.

The second pre-driver 2b generates the gate signals Sg1 to Sg6 based on the aforementioned gate control signals S1 to S6, and outputs the generated gate signals to the motor drive circuit 5 via the second signal cut off switch 3b. By supplying the U phase drive current, the V phase drive current, and the W phase drive current to the motor 6 based on the aforementioned gate signals Sg1 to Sg6, the motor drive circuit 5 rotationally drives the motor 6.

The first signal cut off switch 3a in the main control unit A1 controls the output state (output/no output) of the gate signals Sg1 to Sg6 by the first switching signal that is input from the first switch control unit 4a. The second signal cut off switch 3b in the auxiliary control unit A2 controls the output state (output/no output) of the gate signals Sg1 to Sg6 by the second switching signal that is input from the second switch control unit 4b.

When the second signal cut off switch 3b in the auxiliary control unit A2 outputs the gate signals Sg1 to Sg6 to the motor drive circuit 5, the first signal cut off switch 3a in the main control unit A1 cuts off output of the gate signals Sg1 to Sg6 to the motor drive circuit 5, and makes it to where control of the motor 6 by the auxiliary control unit A2 is not hindered.

On the other hand, when the first signal cut off switch 3a in the main control unit A1 outputs the gate signals Sg1 to Sg6 to the motor drive circuit 5, the second signal cut off switch 3b in the auxiliary control A2 cuts off output of the gate signals Sg1 to Sg6 to the motor drive circuit 5, and makes it to where control of the motor 6 by the main control unit A1 is not hindered.

In other words, the motor drive circuit 5 rotationally drives to the motor 6 by generating a U phase drive current, a V phase drive current, and a W phase drive current based on the gate signals Sg1 to Sg6 that are input from either one of the main control unit A1 or the auxiliary control unit A2.

As explained above, the motor control device 100 according to the first embodiment includes a motor drive circuit 5 that outputs a drive current to the motor 6, the drive current detector 100a which detects the drive current, the main control unit A1, and the auxiliary control unit A2. The motor drive circuit 5 is driven by a drive signal (gate signals Sg1 to Sg6) that is output from the main control unit A1 or the auxiliary control unit A2. The main control unit A1 has a first control signal generator (the first microcomputer 1a) that generates a first control signal (the gate control signals S1 to S6) based on the current detection signal (the U phase conversion current signal, the V phase conversion current signal, and the W phase conversion current signal) that is input from the drive current detector 100a, a first drive signal generator (the first pre-driver 2a) that generates the drive signal based on the first control signal, and the first switcher 100b that switches the output state of the drive signal to the motor drive circuit 5. The auxiliary control unit A2 has a second control signal generator (the second microcomputer 1b) that generates the second control signal (the gate control signals S1 to S6) based on the current detection signal (the U phase conversion current signal, the V phase conversion current signal, and the W phase conversion current signal) that is input from the drive current detector 100a, a second drive signal generator (the second pre-driver 2b) that generates the drive signal based on the second control signal, and the second switcher 100c that switches the output state of the drive signal to the motor drive circuit 5.

From the above motor control device 100, a drive signal generator and a switcher are provided for each of control units A1 and A2. Therefore, even if an abnormality occurs in one of the drive signal generators provided in either of the control units A1 or A2, it is possible to continue control to the motor 6 by using the other drive signal generator. As such, it is possible to provide the motor control device 100 that is more stable against abnormality occurrence. After deliberate consideration, the inventors have concluded that pre-driver malfunctions especially occupy a large percentage of abnormalities, in terms of abnormality occurrence in the motor control device. Therefore, when the pre-driver is used as the drive control signal generator, the configuration of the motor control device 100 in the present embodiment demonstrates excellent results. It is therefore possible to meet the C standards of the automotive safety level (ASIL: Automotive Safety Integrity Level).

According to the first embodiment, the first pre-driver 2a, the first signal cut off switch 3a, and the first switch control unit 4a are provided in the main control unit A1. The second pre-driver 2b, the second signal cut off switch 3b, and the second switch control unit 4b are provided in the auxiliary control unit A2. According to such configuration, when the main control unit A1 is driving the motor 6, the second signal cut off switch 3b is used to cut off output from the auxiliary control unit A2. Therefore, it is possible to prevent the drive of the motor 6 from being interfered with by the main control unit A1. It is also possible to prevent voltage shortage of the drive signal and delay occurrences that result from wrapping around of the main control unit A1 by the output from the auxiliary control unit A2. Similarly, when the auxiliary control unit A2 drives the motor 6, the first signal cut off switch 3a is used to cut off output from the main control unit A1. Therefore, it is possible to prevent having the drive of the motor 6 by the auxiliary control unit A2 be interfered with. It is also possible to prevent voltage shortage of the drive signal and delay occurrences that result from wrapping around of the auxiliary control unit A2 by the output from the main control unit A1.

### Second Embodiment

Next, the motor control device 100 and an electric power steering device according to a second embodiment are explained. Since fundamental configurations of the motor control device 100 and the electric power steering device are similar to those of the first embodiment, explanations that follow mainly focus on differing aspects. Components having similar functions as components explained in the first embodiment have the same names and reference symbols affixed thereto, with detailed explanations being omitted in the explanations below.

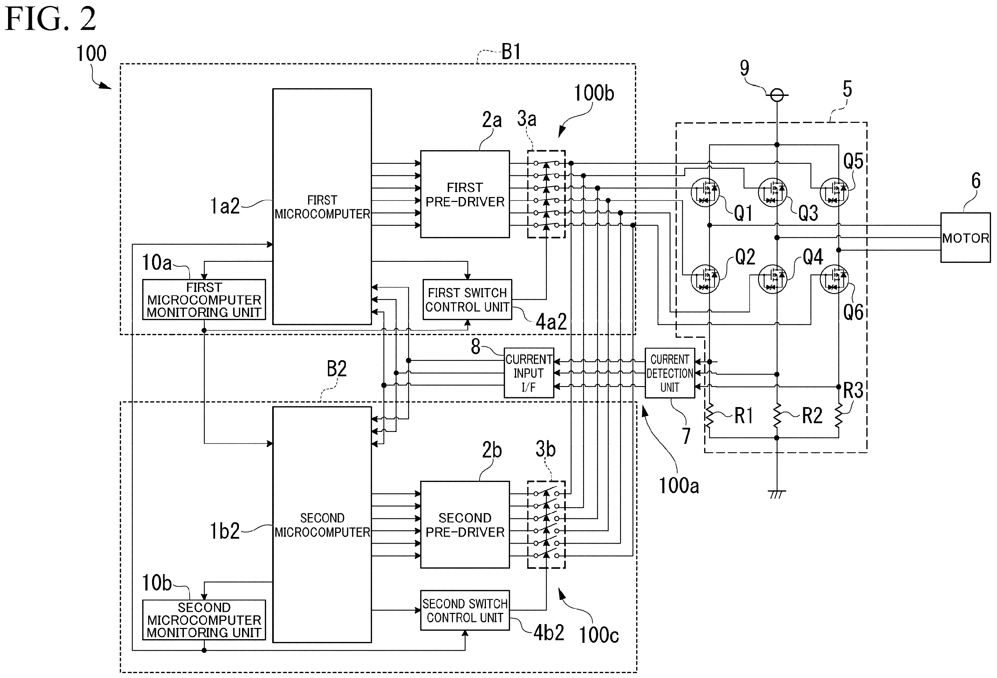

As shown in FIG. 2, the motor control device 100 according to the second embodiment includes a main control unit B1 and an auxiliary control unit B2. The main control unit B1 includes a first microcomputer 1a2 instead of the first microcomputer 1a of the first embodiment, and includes a first switch control unit 4a2 instead of the first switch control unit 4a of the first embodiment. The auxiliary control unit B2 includes a second microcomputer 1b2 instead of the second microcomputer 1b of the first embodiment, and includes a second switch control unit 4b2 instead of the second switch control unit 4b of the first embodiment.

Compared to the main control unit A1 of the first embodiment, a first microcomputer monitoring unit 10a is added to the main control unit B1. Compared to the auxiliary control unit A2 of the first embodiment, a second microcomputer monitoring unit 10b is added to the auxiliary control unit B2.

In addition to the six output terminals and the three input terminals in the first microcomputer 1a of the first embodiment, the first microcomputer 1a2 includes two output terminals and one input terminal. One of the two output terminals in the first microcomputer 1a2 is connected to the first microcomputer monitoring unit 10a. The first microcomputer 1a2 outputs a signal (a first operation state signal) that shows an operation state of the first microcomputer 1a2 to the first microcomputer monitoring unit 10a via the one output terminal.

The other of the two output terminals in the first microcomputer 1a2 is connected to the first switch control unit 4a2. The first microcomputer 1a2 outputs a first output command signal to the first switch control unit 4a2 via the other output terminal. The first output command signal is a signal that outputs the first switching signal which sets the first signal cut off switch 3a to a conductive state, to the first switch control unit 4a2.

The one input terminal in the first microcomputer 1a2 is connected to the second microcomputer monitoring unit 10b. A second abnormality signal is input from the second microcomputer monitoring unit 10b to the first microcomputer 1a2 via the one input terminal. The first microcomputer 1a2 recognizes an abnormality of the second microcomputer 1b2 based on the second abnormality signal.

In addition to the six output terminals and the three input terminals in the second microcomputer 1b of the first embodiment, the second microcomputer 1b2 includes two output terminals and one input terminal. One of the two output terminals in the second microcomputer 1b2 is connected to the second microcomputer monitoring unit 10b. The second microcomputer 1b2 outputs a signal (a second operation state signal) that shows an operation state of the second microcomputer 1b2 to the second microcomputer monitoring unit 10b via the one output terminal.

The other of the two output terminals in the second microcomputer 1b2 is connected to the second switch control unit 4b2. The second microcomputer 1b2 outputs a second output command signal to the second switch control unit 4b2 via the other output terminal. The second output command signal is a signal that outputs the second switching signal which sets the second signal cut off switch 3b to a conductive state, to the second switch control unit 4b2.

The one input terminal in the second microcomputer 1b2 is connected to the first microcomputer monitoring unit 10a. A first abnormality signal is input from the first microcomputer monitoring unit 10a to the second microcomputer 1b2 via the one input terminal. The second microcomputer 1b2 recognizes an abnormality of the first microcomputer 1a2 based on the first abnormality signal.

The first microcomputer monitoring unit 10a includes one input terminal and one output terminal. The input terminal of the first microcomputer monitoring unit 10a is connected to the one output terminal in the first microcomputer 1a2. The output terminal of the first microcomputer monitoring unit 10a is connected to the first switch control unit 4a2 and the second microcomputer 1b2.

The first microcomputer monitoring unit 10a monitors the operation state of the first microcomputer 1a2 based on the first operation state signal that is input from the first microcomputer 1a2. When the first microcomputer monitoring unit 10a determines that the operation state of first microcomputer 1a2 is abnormal, the first microcomputer monitoring unit 10a outputs the first abnormality signal which shows the abnormality, to the first switch control unit 4a2 and the second microcomputer 1b2.

In FIG. 2, the first microcomputer monitoring unit 10a is illustrated as a component that is separate from the first microcomputer 1a2. The first microcomputer monitoring unit 10a however, may be the same configuration component as the first microcomputer 1a2. In other words, the first microcomputer monitoring unit 10a may be a functional component realized by a control program stored in advance in the first microcomputer 1a2.

The second microcomputer monitoring unit 10b includes one input terminal and one output terminal. The input terminal of the second microcomputer monitoring unit 10b is connected to the second microcomputer 1b2. The output terminal of the second microcomputer monitoring unit 10b is connected to the second switch control unit 4b2 and the first microcomputer 1a2.

The second microcomputer monitoring unit 10b monitors the operation state of the second microcomputer 1b2 based on the second operation state signal that is input from the second microcomputer 1b2. When the second microcomputer monitoring unit 10b determines that the operation state of second microcomputer 1b2 is abnormal, the second microcomputer monitoring unit 10b outputs the second abnormality signal which shows the abnormality, to the second switch control unit 4b2 and the first microcomputer 1a2.

In FIG. 2, the second microcomputer monitoring unit 10b is illustrated as a component that is separate from the second microcomputer 1b2. The second microcomputer monitoring unit 10b however, may be the same internal configuration component as the second microcomputer 1b2. In other words, the second microcomputer monitoring unit 10b may be a functional component realized by a control program stored in advance in the second microcomputer 1b2.

The first switch control unit 4a2 includes two input terminals, and one output terminal. One of the two input terminals of the first switch control unit 4a2 is connected to the first microcomputer monitoring unit 10a. The other of the two input terminals of the first switch control unit 4a2 is connected to the first microcomputer 1a2. The output terminal of the first switch control unit 4a2 is connected to the control input terminal in the first signal cut off switch 3a.

The first switch control unit 4a2 generates the first switching signal based on the first abnormality signal that is input from the first microcomputer monitoring unit 10a and a first command signal that is input from the first microcomputer 1a2, and outputs the first switching signal to the first signal cut off switch 3a.

The second switch control unit 4b2 includes two input terminals, and one output terminal. One input terminal of the second switch control unit 4b2 is connected to the second microcomputer monitoring unit 10b. The other input terminal of the second switch control unit 4b2 is connected to the second microcomputer 1b2. The one output terminal of the second switch control unit 4b2 is connected to the control input terminal in the second signal cut off switch 3b.

The second switch control unit 4b2 generates the second switching signal based on the second abnormality signal that is input from the second microcomputer monitoring unit 10b and a second command signal that is input from the second microcomputer 1b2, and outputs the second switching signal to the second signal cut off switch 3b.

When the first microcomputer monitoring unit 10a in the main control unit B1 of the motor control device 100 and the electric power steering device according to the second embodiment detects an abnormality of the first microcomputer 1a2, the first microcomputer monitoring unit 10a outputs the first abnormality signal to the first switch control unit 4a2 and the second microcomputer 1b2.

As a result, the first switch control unit 4a2 in the main control unit B1 outputs the first switching signal, which makes the gate control signals S1 to S6 into no output, to the first signal cut off switch 3a, and output of the gate signals Sg1 to Sg6 to the motor drive circuit 5 is cut off.

At such time, the second microcomputer 1b2 outputs the second command signal that commands the output of the gate signals Sg1 to Sg6 of the motor drive circuit 5 to the second switch control unit 4b2. The second switch control unit 4b2 outputs the second switching signal to the second signal cut off switch 3b, so as to have the gate signals Sg1 to Sg6 that are input from the second pre-driver 2b be output to the motor drive circuit 5. As a result, the gate signals Sg1 to Sg6 are output to the motor drive circuit 5 from the auxiliary control unit B2, instead of the main control unit B1.

On the other hand, when the second microcomputer monitoring unit 10b detects an abnormality of the second microcomputer 1b2, the second microcomputer monitoring unit 10b outputs the second abnormality signal to the second switch control unit 4b2 and the first microcomputer 1a2. The second switch control unit 4b2 then outputs the second switching signal, which makes the gate control signals S1 to S6 into no output, to the second signal cut off switch 3b, and output of the gate signals Sg1 to Sg6 to the motor drive circuit 5 is cut off.

At such time, first microcomputer 1a2 outputs the first command signal that commands the output of the gate signals Sg1 to Sg6 of the motor drive circuit 5 to the first switch control unit 4a2. The first switch control unit 4a2 outputs the first switching signal to the first signal cut off switch 3a, so as to have the gate signals Sg1 to Sg6 that are input from the first pre-driver 2a be output to the motor drive circuit 5. As a result, the gate signals Sg1 to Sg6 are output to the motor drive circuit 5 from the main control unit B 1, instead of the auxiliary control unit B2.

As explained above, the motor control device 100 according to the second embodiment further includes a first control signal generator monitoring unit (the first microcomputer monitoring unit 10a) that monitors an operation state of the first control signal generator (the first microcomputer 1a2), and outputs the first abnormality signal to the first switcher 100b and the second control signal generator (the second microcomputer 1b2) when the first control signal generator monitoring unit determines that an abnormality is occurring in the first control signal generator, and further includes a second control signal generator monitoring unit (second microcomputer monitoring unit 10b) that monitors an operation state of the second control signal generator, and outputs the second abnormality signal to the second switcher 100c and the first control signal generator when the second control signal generator monitoring unit determines that an abnormality is occurring in the second control signal generator. The drive signal (gate signals Sg1 to Sg6) is output to the motor drive circuit 5 from the control unit having no abnormality out of the main control unit B1 and the auxiliary control unit B2.

With the above configuration, the drive signal from the control unit having no abnormality out of the main control unit B1 and the auxiliary control unit B2 is output to the motor drive circuit 5. Therefore, it is possible to further increase stability against abnormality occurrences.

### Third Embodiment

Next, the motor control device 100 and an electric power steering device according to a third embodiment are explained. Since fundamental configurations of the motor control device 100 and the electric power steering device are similar to those of the first embodiment, explanations that follow mainly focus on differing aspects. Components having similar functions as components explained in the first embodiment have the same names and reference symbols affixed thereto, with detailed explanations being omitted in the explanations below.

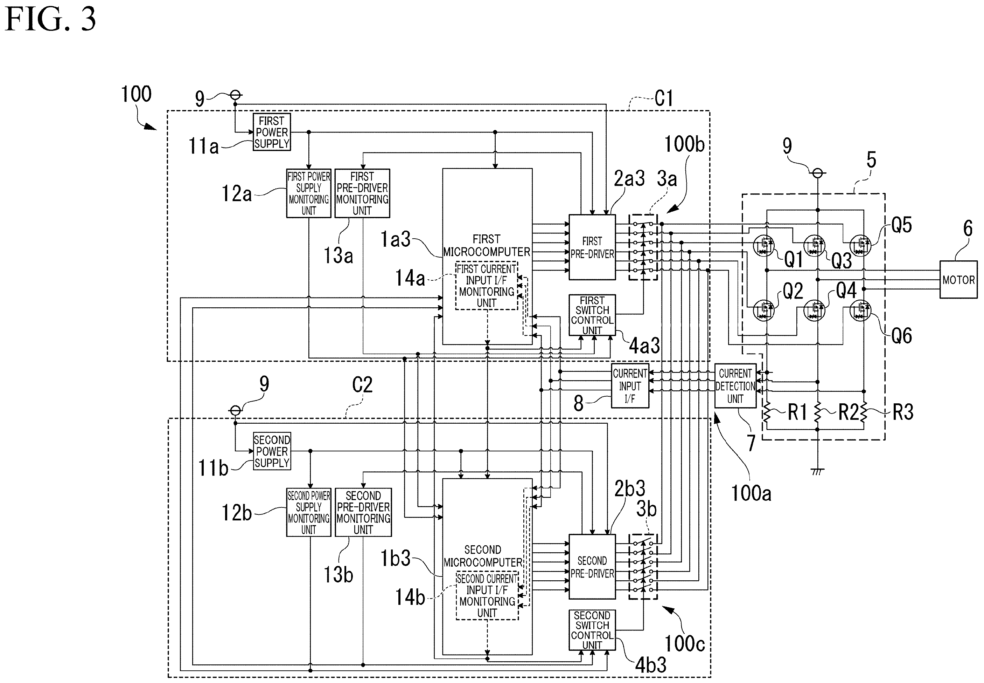

As shown in FIG. 3, the motor control device 100 according to the third embodiment includes a main control unit C1 and an auxiliary control unit C2. The main control unit C1 includes a first microcomputer 1a3 instead of the first microcomputer 1a of the first embodiment, includes a first pre-driver 2a3 instead of the first pre-driver 2a of the first embodiment, and includes a first switch control unit 4a3 instead of the first switch control unit 4a of the first embodiment. The auxiliary control unit C2 includes a second microcomputer 1b3 instead of the second microcomputer 1b of the first embodiment, includes a second pre-driver 2b3 instead of the second pre-driver 2b of the first embodiment, and includes a second switch control unit 4b3 instead of the second switch control unit 4b of the first embodiment.

Compared to the main control unit A1 of the first embodiment, a first power supply 11a, a first power supply monitoring unit 12a, and a first pre-driver monitoring unit 13a (first drive signal generator monitoring unit) are added to the main control unit C1. Compared to the auxiliary control unit A2 of the first embodiment, a second power supply 11b, a second power supply monitoring unit 12b, and a second pre-driver monitoring unit 13b (second drive signal generator monitoring unit) are added to the auxiliary control unit C2.

The first power supply 11a corresponds to the power supply circuit mentioned in the first embodiment. The first power supply 11a includes one input terminal and one output terminal. The input terminal of the first power supply 11a is connected to a positive electrode of the battery 9, and the output terminal of the first power supply 11a is at least connected to the first power supply monitoring unit 12a, the first microcomputer 1a3, and the first pre-driver 2a3. The first power supply 11a supplies a first operation power to at least the first power supply monitoring unit 12a, the first microcomputer 1a3, and the first pre-driver 2a3. The first power supply 11a may supply power to the other components as well.

The first power supply monitoring unit 12a includes one input terminal and one output terminal. The input terminal of the first power supply monitoring unit 12a is connected to the first power supply 11a, and the output terminal of the first power supply monitoring unit 12a is connected to the first switch control unit 4a3 and the second microcomputer 1b3.

The first power supply monitoring unit 12a monitors an operation state of the first power supply 11a based on the first operation power that is input from the first power supply 11a. The first power supply monitoring unit 12a outputs a first power supply abnormality signal to the first switch control unit 4a3 and the second microcomputer 1b3, when the first power supply monitoring unit 12a determines that an error is occurring in the first power supply 11a.

The first pre-driver monitoring unit 13a includes one input terminal and one output terminal. The input terminal of the first pre-driver monitoring unit 13a is connected to the first pre-driver 2a3, and the output terminal of the first pre-driver monitoring unit 13a is connected to the first switch control unit 4a3 and the second microcomputer 1b3.

The first pre-driver monitoring unit 13a monitors the operation state of the first pre-driver 2a3 based on a first pre-driver state signal that is output from the first pre-driver 2a3. The first pre-driver monitoring unit 13a outputs a first drive abnormality signal to the first switch control unit 4a3 and the second microcomputer 1b3, when the first pre-driver monitoring unit 13a determines that an error is occurring in the first pre-driver 2a3.

Just as with the first power supply 11a, the second power supply 11b corresponds to a power supply circuit. The second power supply 11b includes one input terminal and one output terminal. The input terminal of the second power supply 11b is connected to a positive electrode of the battery 9, and the output terminal of the second power supply 11b is at least connected to the second power supply monitoring unit 12b, the second microcomputer 1b3, and the second pre-driver 2b3. The second power supply 11b supplies a second operation power to at least the second power supply monitoring unit 12b, the second microcomputer 1b3, and the second pre-driver 2b3. The second power supply 11b may supply power to the other components as well.

The second power supply monitoring unit 12b includes one input terminal and one output terminal. The input terminal of the second power supply monitoring unit 12b is connected to the second power supply 11b, and the output terminal of the second power supply monitoring unit 12b is connected to the second switch control unit 4b3 and the first microcomputer 1a3.

The second power supply monitoring unit 12b monitors an operation state of the second power supply 11b based on the second operation power that is input from the second power supply 11b. The second power supply monitoring unit 12b outputs a second power supply abnormality signal to the second switch control unit 4b3 and the first microcomputer 1a3, when the second power supply monitoring unit 12b determines that an error is occurring in the second power supply 11b.

The second pre-driver monitoring unit 13b includes one input terminal and one output terminal. The input terminal of the second pre-driver monitoring unit 13b is connected to the second pre-driver 2b3, and the output terminal of the second pre-driver monitoring unit 13b is connected to the second switch control unit 4b3 and the first microcomputer 1a3.

The second pre-driver monitoring unit 13b monitors the operation state of the second pre-driver 2b3 based on a second pre-driver state signal that is output from the second pre-driver 2b3. The second pre-driver monitoring unit 13b outputs the second power supply abnormality signal to the second switch control unit 4b3 and the first microcomputer 1a3, when the second pre-driver monitoring unit 13b determines that an error is occurring in the second pre-driver 2b3.

In addition to the six output terminals and the three input terminals in the first microcomputer 1a of the first embodiment, the first microcomputer 1a3 includes one output terminal, four input terminals, and a first current input I/F monitoring unit 14a.

The output terminal of the first microcomputer 1a3 is connected to the first switch control unit 4a3 and the second microcomputer 1b3. The first microcomputer 1a3 outputs a first current input I/F abnormality signal that is generated by the first current input I/F monitoring unit 14a to the first switch control unit 4a3 and the second microcomputer 1b3 via the output terminal.

An input terminal of the first microcomputer 1a3 is connected to the first power supply 11a. The first operation power from the first power supply 11a is input to the first microcomputer 1a3 via the aforementioned input terminal. The first microcomputer 1a3 operates based on the first operation power.

An input terminal of the first microcomputer 1a3 is connected to the second power supply monitoring unit 12b. A second power supply abnormality signal is input to the first microcomputer 1a3 via the aforementioned input terminal.

An input terminal of the first microcomputer 1a3 is connected to the second pre-driver monitoring unit 13b. A second drive abnormality signal is input to the first microcomputer 1a3 via the aforementioned input terminal.

An input terminal of the first microcomputer 1a3 is connected to the second microcomputer 1b3. A second current input I/F abnormality signal is input to the first microcomputer 1a3 via the aforementioned input terminal.

The first current input I/F monitoring unit 14a is a functional component that is provided within the first microcomputer 1a3. The first current input I/F monitoring unit 14a monitors an operation state of the current input I/F 8 based on the U phase conversion current signal, the V phase conversion current signal, and the W phase conversion current signal that are input to the first microcomputer 1a3 from the current input I/F 8. When first current input I/F monitoring unit 14a determines that an abnormality occurred in the current input I/F 8, the first current input I/F monitoring unit 14a outputs the first current input I/F abnormality signal which shows the abnormality to the first switch control unit 4a3 and the second microcomputer 1b3.

On the other hand, in addition to the six output terminals and the three input terminals in the second microcomputer 1b of the second embodiment, the second microcomputer 1b3 includes one output terminal, four input terminals, and the second current input I/F monitoring unit 14b.

The output terminal of the second microcomputer 1b3 is connected to the second switch control unit 4b3and the first microcomputer 1a3. The second microcomputer 1b3 outputs the second current input I/F abnormality signal that is generated by the second current input I/F monitoring unit 14b to the second switch control unit 4b3 and the first microcomputer 1a3 via the aforementioned output terminal.

An input terminal of the second microcomputer 1b3 is connected to the second power supply 11b. A second operation power from the second power supply 11b is input to the second microcomputer 1b3 via the aforementioned input terminal. The second microcomputer 1b3 operates based on the second operation power.

An input terminal of the second microcomputer 1b3 is connected to the first power supply monitoring unit 12a. The first power supply abnormality signal is input to the second microcomputer 1b3 via the aforementioned input terminal.

An input terminal of the second microcomputer 1b3 is connected to the first pre-driver monitoring unit 13a. The first drive abnormality signal is input to the second microcomputer 1b3 via the aforementioned input terminal.

An input terminal of the second microcomputer 1b3 is connected to the first microcomputer 1a3. The first current input I/F abnormality signal is input to the second microcomputer 1b3 via the aforementioned input terminal.

The second current input I/F monitoring unit 14b is a functional component that is provided within the second microcomputer 1b3. The second current input I/F monitoring unit 14b monitors the operation state of the current input I/F 8 based on the U phase conversion current signal, the V phase conversion current signal, and the W phase conversion current signal that are input to the second microcomputer 1b3 from the current input I/F 8. When the second current input I/F monitoring unit 14b determines that an abnormality occurred in the current input I/F 8, the second current input I/F monitoring unit 14b outputs the second current input I/F abnormality signal which shows the abnormality to the second switch control unit 4b3 and the first microcomputer 1a3.

In addition to the six input terminals and the six output terminals in the first pre-driver 2a of the first embodiment, the first pre-driver 2a3 includes one output terminal and two input terminals. The one output terminal of the first pre-driver 2a3 is connected to the first pre-driver monitoring unit 13a. The first pre-driver 2a3 outputs the first pre-driver state signal which shows the operation state of the first pre-driver 2a3 to the first pre-driver monitoring unit 13a via the one output terminal.

An input terminal of the first pre-driver 2a3 is connected to a positive electrode of the battery 9, and a voltage (positive voltage) is input to the positive electrode. An input terminal of the first pre-driver 2a3 is connected to the first power supply 11a, and the first operation power is input thereto.

Along with generating the gate signal Sg1 to Sg6 based on the gate control signal S1 to S6, the first pre-driver 2a3 includes a function of generating the positive voltage, and of generating the first pre-driver state signal based on the first operation power.

In addition to the six input terminals and the six output terminals in the second pre-driver 2b of first embodiment, the second pre-driver 2b3 includes one output terminal and two input terminals. The one output terminal of the second pre-driver 2b3 is connected to the second pre-driver monitoring unit 13b, and outputs the second pre-driver state signal which shows the operation state of the second pre-driver 2b3 to the second pre-driver monitoring unit 13b.

One input terminal of the second pre-driver 2b3 is connected to the positive electrode of the battery 9, and a voltage (positive voltage) is input to the positive electrode. The other input terminal of the second pre-driver 2b3 is connected to the second power supply 11b, and a second operation power is input thereto.

Along with generating the gate signal Sg1 to Sg6 from the gate control signal S1 to S6, the second pre-driver 2b3 includes a function of generating the positive voltage, and of generating the second pre-driver state signal based on the second operation power.

The first switch control unit 4a3 includes three input terminals and one output terminal.

An input terminal of the first switch control unit 4a3 is connected to the first power supply monitoring unit 12a, and the first power supply abnormality signal is input thereto.

An input terminal of the first switch control unit 4a3 is connected to the first pre-driver monitoring unit 13a, and the first drive abnormality signal is input thereto.

An input terminal of the first switch control unit 4a3 is connected to the first microcomputer 1a3, and the first current input I/F abnormality signal that is output from the first current input I/F monitoring unit 14a is input thereto.

The first switch control unit 4a3 generates the first switching signal based on the first power supply abnormality signal, the first drive abnormality signal and the first current input I/F abnormality signal, and outputs the first switching signal to the first signal cut off switch 3a. In other words, when any one of the first power supply abnormality signal, the first drive abnormality signal, or the first current input I/F abnormality signal is input, the first switch control unit 4a3 cuts off output of the gate signal Sg1 to Sg6 from the first signal cut off switch 3a to the motor drive circuit 5.

The second switch control unit 4b3 includes three input terminals and one output terminal.

An input terminal of the second switch control unit 4b3 is connected to the second power supply monitoring unit 12b, and the second power supply abnormality signal is input thereto.

An input terminal of the second switch control unit 4b3 is connected to the second pre-driver monitoring unit 13b, and the second drive abnormality signal is input thereto.

An input terminal of the second switch control unit 4b3 is connected to the second microcomputer 1b3, and the second current input I/F abnormality signal that is output from the second current input I/F monitoring unit 14b is input thereto.

The second switch control unit 4b3 generates the second switching signal based on the second power supply abnormality signal, the second drive abnormality signal and the second current input I/F abnormality signal, and outputs the second switching signal to the second signal cut off switch 3b. In other words, when any one of the second power supply abnormality signal, the second drive abnormality signal, or the second current input I/F abnormality signal is input, the second switch control unit 4b3 cuts off output of the gate signal Sg1 to Sg6 from the second signal cut off switch 3b to the motor drive circuit 5.

The first current input I/F monitoring unit 14a corresponds to a first detector monitoring unit, and the second current input I/F monitoring unit 14b corresponds to a second detector monitoring unit. The first current input I/F abnormality signal output by the first current input I/F monitoring unit 14a corresponds to a first current detection abnormality signal. The second current input I/F abnormality signal output by the second current input I/F monitoring unit 14b corresponds to a second current detection abnormality signal.

In the motor control device 100 and an electric power steering device according to the third embodiment, the first switch control unit 4a3 outputs the first switching signal to the first signal cut off switch 3a when an abnormality occurs in any one of the first power supply 11a, the first pre-driver 2a3, or the current input I/F 8. As such, output of the gate signals Sg1 to Sg6 from the first signal cut off switch 3a to the motor drive circuit 5 is cut off.

On the other hand, the second switch control unit 4b3 outputs the second switching signal to the second signal cut off switch 3b when an abnormality occurs in any one of the second power supply 11b, the second pre-driver 2b3, or the current input I/F 8. As such, output of the gate signals Sg1 to Sg6 from the second signal cut off switch 3b to the motor drive circuit 5 is cut off.

As explained above, the motor control device 100 according to the present embodiment further includes a first drive signal generator monitoring unit (first pre-driver monitoring unit 13a) that monitors an operation state of the first drive signal generator (first pre-driver 2a3), and outputs the first drive abnormality signal to the first switcher 100b and the second control signal generator (the second microcomputer 1b3) when the first drive signal generator monitoring unit determines that an abnormality is occurring in the first drive signal generator, and further includes a second drive signal generator monitoring unit (second pre-driver monitoring unit 13b) that monitors an operation state of the second drive signal generator (second pre-driver 2b3), and outputs the second drive abnormality signal to the second switcher 100c and the first control signal generator when the second drive signal generator monitoring unit determines that an abnormality is occurring in the second drive signal generator. The drive signal is output to the motor drive circuit 5 from the control unit having no abnormality out of the main control unit C1 and the auxiliary control unit C2. With such configuration, by monitoring the operation state of the first drive signal generator and of the second drive signal generator, it is possible to further increase stability against abnormality occurrences in the aforementioned drive signal generators.

The motor control device 100 according to the present embodiment further includes the first power supply 11a that supplies operation power to the first control signal generator (the first microcomputer 1a3) and the first drive signal generator (the first pre-driver 2a3), the second power supply 11b that supplies operation power to the second control signal generator (the second microcomputer 1b3) and the second drive signal generator (the second pre-driver 2b3), the first power supply monitoring unit 12a that monitors the operation state of the first power supply 11a, and outputs the first power supply abnormality signal to the first switcher 100b and the second control signal generator when the first power supply monitoring unit 12a determines that an abnormality is occurring in the first power supply 11a, and the second power supply monitoring unit 12b that monitors the operation state of the second power supply 11b, and outputs the second power supply abnormality signal to the second switcher 100c and the first control signal generator when the second power supply monitoring unit 12b determines that an abnormality is occurring in the second power supply 11b. The drive signal is output to the motor drive circuit 5 from the control unit having no abnormality out of the main control unit C1 and the auxiliary control unit C2. With such configuration, by monitoring the operation state of the first power supply 11a and the second power supply 11b, it is possible to further increase stability of power supplies 11a and 11b against abnormality occurrences.

The motor control device 100 according to the present embodiment further includes the first detector monitoring unit (the first current input I/F monitoring unit 14a) that is provided in the main control unit C1, that monitors the operation state of the drive current detector 100a, and that outputs the first current detection abnormality signal to the first switcher 100b and the second control signal generator when the first detector monitoring unit determines that an abnormality is occurring in the drive current detector 100a, and the second detector monitoring unit (second current input I/F monitoring unit 14b) that is provided in the auxiliary control unit C2, that monitors the operation state of the drive current detector 100a, and that outputs the second current detection abnormality signal to the second switcher 100c and the first control signal generator when the second detector monitoring unit determines that an abnormality is occurring in the drive current detector 100a.

In addition to the effects explained in the configuration of the second embodiment, it is possible to increase abnormality detection rate in the main unit control C1 and the auxiliary control unit C2 with the aforementioned configuration of the third embodiment. According to the third embodiment, it is also possible to detect abnormality occurrence in the current input I/F 8. Therefore, it is possible to realize more accurate switching of the control unit, and it is possible to further increase stability against abnormality occurrences.

### Fourth Embodiment

Next, the motor control device 100 and an electric power steering device according to a fourth embodiment are explained. Since fundamental configurations of the motor control device 100 and the electric power steering device are similar to those of the third embodiment, explanations that follow mainly focus on differing aspects. Components having similar functions as components explained in the third embodiment have the same names and reference symbols affixed thereto, with detailed explanations being omitted in the explanations below.

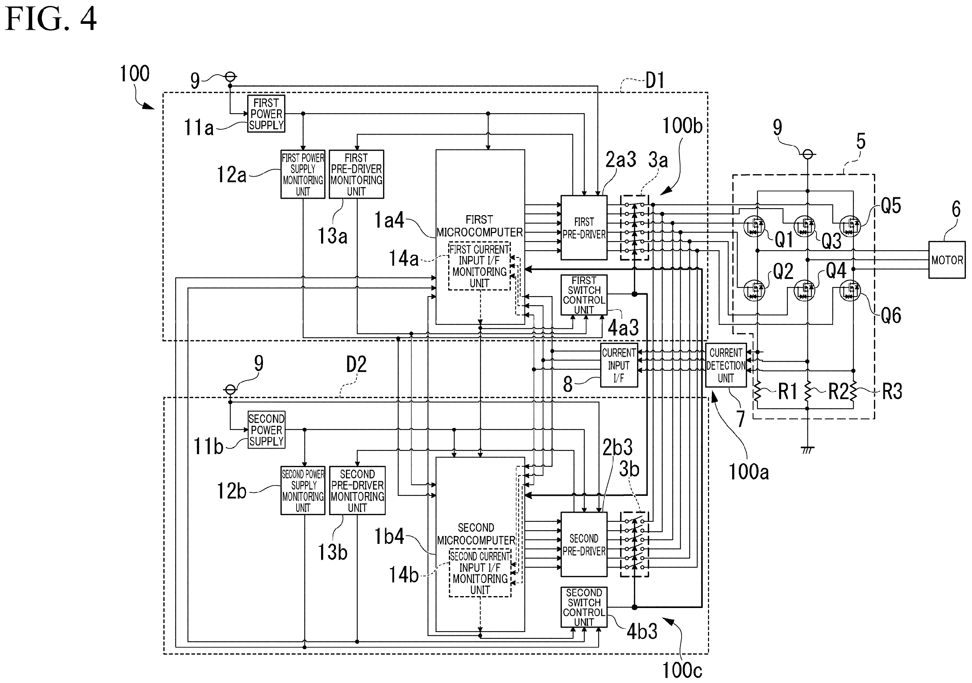

As shown in FIG. 4, the motor control device 100 according to the fourth embodiment includes a main control unit D1 and an auxiliary control unit D2. The main control unit D1 includes a first microcomputer 1a4 instead of the first microcomputer 1a3 of the third embodiment. The auxiliary control unit D2 includes a second microcomputer 1b4 instead of the second microcomputer 1b3 of the third embodiment.

Compared to the first microcomputer 1a3 of the third embodiment, the first microcomputer 1a4 has an additional input terminal. The aforementioned input terminal is connected to the second switch control unit 4b3. The first microcomputer 1a4 recognizes an operation state of the second switch control unit 4b3 based on the second switching signal that is input from the second switch control unit 4b3.

Compared to the second microcomputer 1b3 of the third embodiment, the second microcomputer 1b4 has an additional input terminal. The aforementioned input terminal is connected to the first switch control unit 4a3. The second microcomputer 1b4 recognizes an operation state of the first switch control unit 4a3 based on the first switching signal that is input from the first switch control unit 4a3.

In the third embodiment, when an abnormality of the first power supply 11a is inadvertently determined by the second microcomputer 1b3 for example, there is possibility that the gate signals Sg1 to Sg6 are input to the motor drive circuit 5 from both the main control unit C1 and the auxiliary control unit C2.

In response to such problem, in the first microcomputer 1a4 of the fourth embodiment, the second switching signal is input from the second switch control unit 4b3. As such, in a state where the auxiliary control unit D2 outputs the gate signals Sg1 to Sg6 to the motor drive circuit 5, the main control unit D1 does not output the gate signals Sg1 to Sg6 to the motor drive circuit 5.

In the second microcomputer 1b4, the first switching signal is input from the first switch control unit 4a3. As such, in a state where the main control unit D1 outputs the gate signals Sg1 to Sg6 to the motor drive circuit 5, the auxiliary control unit D2 does not output the gate signals Sg1 to Sg6 to the motor drive circuit 5.

As explained above, the main control unit D1 outputs a drive signal (the gate signals Sg1 to Sg6) to the motor drive circuit 5 via the first switcher 100b only when the second switcher 100c does not output the drive signal to the motor drive circuit 5, and the auxiliary control unit D2 outputs the drive signal to the motor drive circuit 5 via the second switcher 100c only when the first switcher 100b does not output the drive signal the motor drive circuit 5. From such configuration, it is possible to avoid having the gate signals Sg1 to Sg6 be outputted to the motor drive circuit 5 from both the main control unit D1 and the auxiliary control unit D2.

### Fifth Embodiment

Next, the motor control device 100 and an electric power steering device according to a fifth embodiment are explained. Since fundamental configurations of the motor control device 100 and the electric power steering device are similar to those of the first embodiment, explanations that follow mainly focus on differing aspects. Components having similar functions as components explained in the first embodiment have the same names and reference symbols affixed thereto, with detailed explanations being omitted in the explanations below.

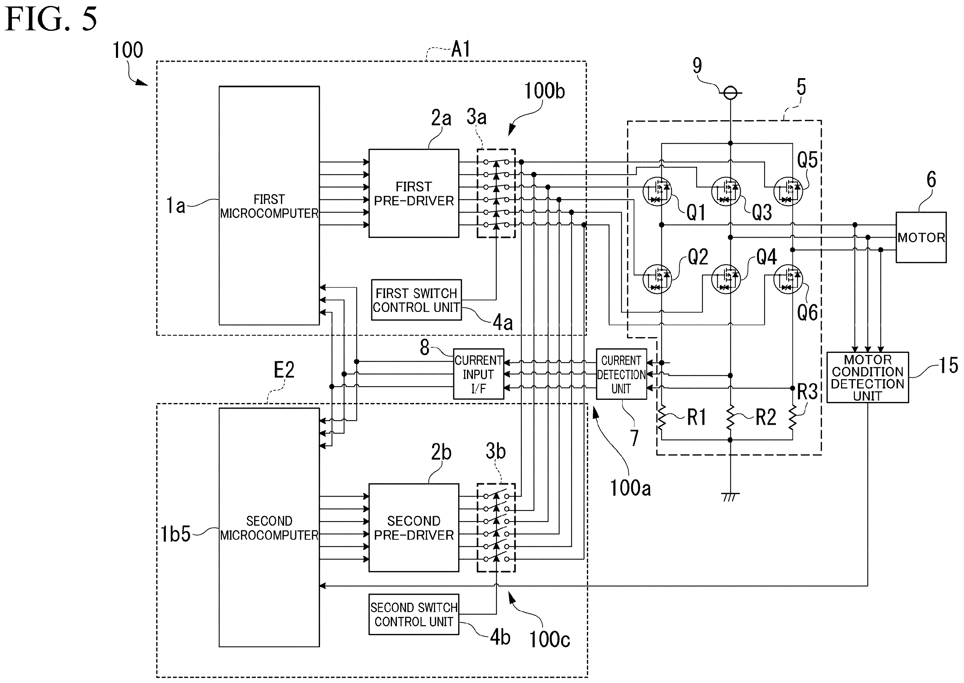

As shown in FIG. 5, the motor control device 100 according to the fifth embodiment includes the main control unit A1 and an auxiliary control unit E2. The auxiliary control unit E2 includes a second microcomputer 1b5 instead of the second microcomputer 1b of the first embodiment.

Compared to the motor control device 100 of the first embodiment, the motor control device 100 according to the fifth embodiment has a motor terminal state detection unit 15. The motor terminal state detection unit 15 includes three input terminals and one output terminal.

Each input terminal of the motor terminal state detection unit 15 is connected to each of a U phase switching leg, a V phase switching leg, and a W phase switching leg. The output terminal of the motor terminal state detection unit 15 is connected to the second microcomputer 1b5.

The motor terminal state detection unit 15 detects a state (motor terminal state) of three input terminals of the motor 6, in other words, the U phase input terminal, the V phase input terminal, and the W phase input terminal, and outputs the motor terminal state to the second microcomputer 1b5 as a motor terminal state detection signal.

The second microcomputer 1b5 conducts the operation below in a state where the supply of the gate signal Sg1 to Sg6 from the main control unit A1 to the motor drive circuit 5 is cut off, and the supply of the gate signal Sg1 to Sg6 from the auxiliary control unit E2 to the motor drive circuit 5 is being conducted. In other words, the gate control signals S1 to S6 which render all the switching transistors Q1 to Q6 that configure the motor drive circuit 5 to the OFF state (no transmission state), in other words, the gate control signals S1 to S6 that sequentially transmit to the switching transistors Q1 to Q6 individually, are output to the individually the second pre-driver 2b.

By referencing the motor terminal state detection signal that is input from the motor terminal state detection unit 15 in the aforementioned state, the second microcomputer 1b5 diagnoses failure of the auxiliary control unit E2, in other words, failures of the second pre-driver 2b, the second signal cut off switch 3b, and the second switch control unit 4b.

For example, in a state where the gate control signals S1 to S6 which render all of the switching transistors Q1 to Q6 in the OFF state (no transmission state) are output to the second pre-driver 2b by the second microcomputer 1b5, a case where the motor terminal state detection signal shows that any one of the switching transistors Q1 to Q6 is in the ON state (transmission state) is considered. In such case, the second microcomputer 1b5 determines that a failure is occurring in any one of the second pre-driver 2b, the second signal cut off switch 3b, or the second switch control unit 4b.

In a state where the gate control signals S1 to S6 that sequentially transmit the switching transistors Q1 to Q6 individually are output to the second pre-driver 2b by the second microcomputer 1b5, a case where the second microcomputer 1b5 shows the transmission state of the switching transistors Q1 to Q6 of the motor terminal state detection signal that differ from the gate control signals S1 to S6 is considered. In such case, the second microcomputer 1b5 determines that a failure is occurring in any one of the second pre-driver 2b, the second signal cut off switch 3b, or the second switch control unit 4b.

It is not possible to conduct the above failure determination in a state where the main control unit A1 or the auxiliary control unit E2 are being controlled. Therefore, the above determination is conducted in a state where the main control unit A1 and the auxiliary control unit E2 are both not controlling the motor 6, in other words, in a state where no assist by the electric power steering device is being conducted on steering operation.

As explained above, the motor control device 100 according to the present embodiment further includes the motor terminal state detection unit 15 that detects a state of the input terminal of the motor 6 as the motor terminal state. By referencing the motor terminal state (the motor terminal state detection signal output by the motor terminal state detection unit 15), the second control signal generator (the second microcomputer 1b5) determines the occurrence of failure in the auxiliary control unit E2. According to such a configuration, since it is possible for the auxiliary control unit E2 to diagnose failures, it is possible to further increase reliability of the motor control device 100 and electric power steering device.

### Sixth Embodiment

Next, the motor control device 100 and an electric power steering device according to a sixth embodiment are explained. Since fundamental configurations of the motor control device 100 and the electric power steering device are similar to those of the first embodiment, explanations that follow mainly focus on differing aspects. Components having similar functions as components explained in the first embodiment have the same names and reference symbols affixed thereto, with detailed explanations being omitted in the explanations below.

In the motor control device 100 according to the sixth embodiment, computing power of the second microcomputer 1b is less than computing power of the first microcomputer 1a, out of the first microcomputer 1a and the second microcomputer 1b in the first embodiment.

In other words, the motor control device 100 according to the sixth embodiment does not use two microcomputers (large scale integrated circuit) with the same computing power, but a large scale integrated circuit as the second microcomputer 1b having less computing power than the large scale integrated circuit as the first microcomputer 1a is adopted.

The auxiliary control unit A2 of the first embodiment only operates when an error occurs in the main control unit A1. Therefore using the second microcomputer 1b as the large scale integrated circuit having lower computing power than the first microcomputer 1a is enough for the motor control device 100 to function.

According to the configuration of the sixth embodiment, since the second microcomputer 1b having a lower computing power than the first microcomputer 1a is used as the large scale integrated circuit, it is possible to make the auxiliary control unit A2 even cheaper. Therefore, according to the sixth embodiment, it is possible to reduce the cost of the motor control device 100 and electric power steering device.

### Seventh Embodiment

Next, the motor control device 100 and an electric power steering device according to a seventh embodiment are explained. Since fundamental configurations of the motor control device 100 and the electric power steering device are similar to those of the first embodiment, explanations that follow mainly focus on differing aspects. Components having similar functions as components explained in the first embodiment have the same names and reference symbols affixed thereto, with detailed explanations being omitted in the explanations below.

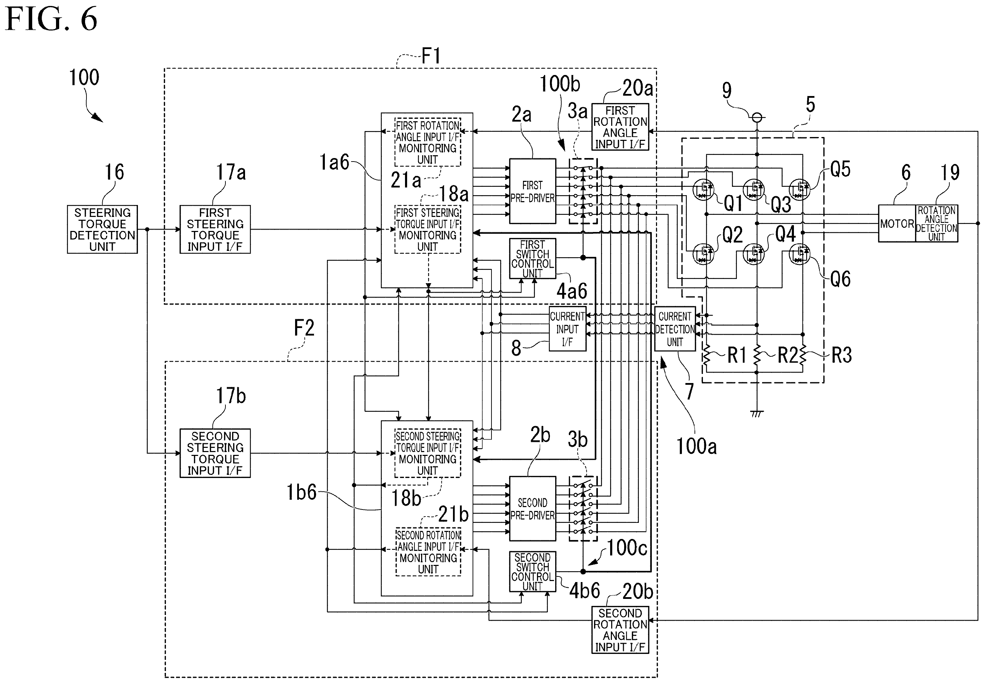

As shown in FIG. 6, the motor control device 100 according to the seventh embodiment includes a main control unit F1 and an auxiliary control unit F2. The main control unit F1 includes a first microcomputer 1a6 instead of the first microcomputer 1a of the first embodiment, and a first switch control unit 4a6 instead of the first switch control unit 4a of the first embodiment. The auxiliary control unit F2 includes a second microcomputer 1b6 instead of the second microcomputer 1b of the first embodiment, and a second switch control unit 4a6 instead of the second switch control unit 4a of the first embodiment.

Compared to the main control unit A1 of the first embodiment, the main control unit F1 additionally has a first steering torque input I/F 17a and a first rotation angle input I/F 20a. Compared to the auxiliary control unit A2 of the first embodiment, the auxiliary control unit F2 additionally has a second steering torque input I/F 17b and a second rotation angle input I/F 20b.

As shown in FIG. 6, the electric power steering device according to the seventh embodiment includes a steering torque detection unit 16 and a rotation angle detection unit 19.

The steering torque detection unit 16 is connected to the first steering torque input I/F 17a and the second steering torque input I/F 17b. The steering torque detection unit 16 detects a torque of steering of an automobile operator as a steering torque, and outputs a detection torque signal that shows the steering torque to the first steering torque input I/F 17a and the second steering torque input I/F 17b.

The first steering torque input I/F 17a includes one input terminal and one output terminal. The input terminal of the first steering torque input I/F 17a is connected to the steering torque detection unit 16, and the output terminal of the first steering torque input I/F 17a is connected to the first microcomputer 1a6. The first steering torque input I/F 17a converts a detected torque signal that is input from the steering torque detection unit 16 to a first torque conversion signal suitable for input to the first microcomputer 1a6, and outputs the detected torque signal to the first microcomputer 1a6.

The second steering torque input I/F 17b includes one input terminal and one output terminal. The input terminal of the second steering torque input I/F 17b is connected to the steering torque detection unit 16, and the output terminal of the second steering torque input I/F 17b is connected to the second microcomputer 1b6. The second steering torque input I/F 17b converts a detected torque signal that is input from the steering torque detection unit 16 to a second torque conversion signal suitable for input to the second microcomputer 1b6, and outputs the detected torque signal to the second microcomputer 1b6.

The rotation angle detection unit 19 includes an output terminal that is connected to the first rotation angle input I/F 20a and to the second rotation angle input I/F 20b. The rotation angle detection unit 19 detects a rotation angle of the motor 6, and outputs a rotation angle detection signal that shows the rotation angle to the first rotation angle input I/F 20a and the second rotation angle input I/F 20b.

The first rotation angle input I/F 20a includes one input terminal and one output terminal. The input terminal of the first rotation angle input I/F 20a is connected to the rotation angle detection unit 19, and the output terminal of the first rotation angle input I/F 20a is connected to the first microcomputer 1a6. The first rotation angle input I/F 20a converts the rotation angle detection signal that is input from the rotation angle detection unit 19 to a first rotation conversion signal suitable for input to the first microcomputer 1a6 and outputs the first rotation conversion signal to the first microcomputer 1a6.

The second rotation angle input I/F 20b includes one input terminal and one output terminal. The input terminal of the second rotation angle input I/F 20b is connected to the rotation angle detection unit 19, and the output terminal of the second rotation angle input I/F 20b is connected to the second microcomputer 1b6. The second rotation angle input I/F 20b converts the rotation angle detection signal that is input from the rotation angle detection unit 19 to a second rotation conversion signal suitable for input to the second microcomputer 1b6 and outputs the second rotation conversion signal to the second microcomputer 1b6.

In addition to the six output terminals and the three output terminals in the first microcomputer 1a of the first embodiment, the first microcomputer 1a6 includes five input terminals, two output terminals, a first steering torque input I/F monitoring unit 18a, and a first rotation angle input I/F monitoring unit 21a.

An input terminal of the first microcomputer 1a6 is connected to the first steering torque input I/F 17a, and the first torque conversion signal from the first steering torque input I/F 17a is input thereto.

An input terminal of the first microcomputer 1a6 is connected to the first rotation angle input I/F 20a, and the first rotation conversion signal from the first rotation angle input I/F 20a is input thereto.

An input terminal of the first microcomputer 1a6 is connected to the second steering torque input I/F monitoring unit 18b, and a second steering torque input I/F abnormality signal from the second steering torque input I/F monitoring unit 18b is input thereto.

An input terminal of the first microcomputer 1a6 is connected to the second rotation angle input I/F monitoring unit 21b, and a second rotation angle input I/F abnormality signal from the second rotation angle input I/F monitoring unit 21b is input thereto.

An input terminal of the first microcomputer 1a6 is connected to the second switch control unit 4b6, and the second switching signal from the second switch control unit 4b6 is input thereto.

An output terminal of the first microcomputer 1a6 is connected to the first switch control unit 4a6 and to the second microcomputer 1b6, and outputs a first steering torque input I/F abnormality signal that is output from the first steering torque input I/F monitoring unit 18a to the first switch control unit 4a6 and to the second microcomputer 1b6.

An output terminal of the first microcomputer 1a6 is connected to the first switch control unit 4a6 and to the second microcomputer 1b6, and outputs a first rotation angle input I/F abnormality signal that is output from the first rotation angle input I/F monitoring unit 21a to the first switch control unit 4a6 and to the second microcomputer 1b6.

The first steering torque input I/F monitoring unit 18a is a functional component that is provided within the first microcomputer 1a6. The first steering torque input I/F monitoring unit 18a includes one input terminal and one output terminal. The first steering torque input I/F monitoring unit 18a monitors an operation state of the first steering torque input I/F 17a based on the first torque conversion signal that is input from the first steering torque input I/F 17a. When the first steering torque input I/F monitoring unit 18a determines that an abnormality occurred at the first steering torque input I/F 17a, the first steering torque input I/F monitoring unit 18a outputs the first steering torque input I/F abnormality signal which shows the abnormality to the first switch control unit 4a6 and to the second microcomputer 1b6.

The first rotation angle input I/F monitoring unit 21a is a functional component that is provided within the first microcomputer 1a6. The first rotation angle input I/F monitoring unit 21a includes one input terminal and one output terminal. The first rotation angle input I/F monitoring unit 21a monitors the operation state of the first rotation angle input I/F 20a based on the first rotation conversion signal that is input from the first rotation angle input I/F 20a. When the first rotation angle input I/F monitoring unit 21a determines an abnormality of the first rotation angle input I/F 20a, the first rotation angle input I/F monitoring unit 21a outputs the first rotation angle input I/F abnormality signal which shows the abnormality to the first switch control unit 4a6 and the second microcomputer 1b6.

In addition to the six output terminals and the three input terminals in the second microcomputer 1b of the first embodiment, the second microcomputer 1b6 includes five input terminals, two output terminals, the second steering torque input I/F monitoring unit 18b, and the second rotation angle input I/F monitoring unit 21b.

An input terminal of the second microcomputer 1b6 is connected to the output terminal of the second steering torque input I/F 17b, and the second torque conversion signal is input from the second steering torque input I/F 17b.

An input terminal of the second microcomputer 1b6 is connected to the second rotation angle input I/F 20b, and the second rotation conversion signal is input from the second rotation angle input I/F 20b.

An input terminal of the second microcomputer 1b6 is connected to the first steering torque input I/F monitoring unit 18a in the first microcomputer 1a6, and the first steering torque input I/F abnormality signal is input from the first steering torque input I/F monitoring unit 18a.

An input terminal of the second microcomputer 1b6 is connected to the first rotation angle input I/F monitoring unit 21a in the first microcomputer 1a6, and the first rotation angle input I/F abnormality signal is input from the first rotation angle input I/F monitoring unit 21a.

An input terminal of the second microcomputer 1b6 is connected to the first switch control unit 4a6 in the first microcomputer 1a6, and the first switching signal is input from the first switch control unit 4a6.

An output terminal of the second microcomputer 1b6 is connected to the second switch control unit 4b6 and the first microcomputer 1a6, and outputs the second steering torque input I/F abnormality signal that is output from the second steering torque input I/F monitoring unit 18b to the second switch control unit 4b6 and the first microcomputer 1a6.

An output terminal of the of the second microcomputer 1b6 is connected to the second switch control unit 4b6 and the first microcomputer 1a6, and outputs the second rotation angle input I/F abnormality signal that is output from the second rotation angle input I/F monitoring unit 21b to the second switch control unit 4b6 and the first microcomputer 1a6.

The second steering torque input I/F monitoring unit 18b is a functional component that is provided within the second microcomputer 1b6. The second steering torque input I/F monitoring unit 18b includes one input terminal and one output terminal. The second steering torque input I/F monitoring unit 18b monitors an operation state of the second steering torque input I/F 17b based on the second torque conversion signal that is input from the second steering torque input I/F 17b. When the second steering torque input I/F monitoring unit 18b determines that an abnormality occurred at the second steering torque input I/F 17b, the second steering torque input I/F monitoring unit 18b outputs the second steering torque input I/F abnormality signal which shows the abnormality, to the second switch control unit 4b6 and the first microcomputer 1a6.

The second rotation angle input I/F monitoring unit 21b is a functional component that is provided within the second microcomputer 1b6. The second rotation angle input I/F monitoring unit 21b includes one input terminal and one output terminal. The second rotation angle input I/F monitoring unit 21b monitors an operation state of the second rotation angle input I/F 20b based on the second rotation conversion signal that is input from the second rotation angle input I/F 20b. When the second rotation angle input I/F monitoring unit 21b determines that an abnormality occurred at the second rotation angle input I/F 20b, the second rotation angle input I/F monitoring unit 21b outputs the second rotation angle input I/F abnormality signal which shows the abnormality, to the second switch control unit 4b6 and the first microcomputer 1a6.

Next, an operation of a motor control device 100 and an electric power steering device according to the seventh embodiment is explained.

The first microcomputer 1a6 generates the gate control signal S1 to S6 based on the first torque conversion signal that is input from the first steering torque input I/F 17a, the U phase conversion current signal, the V phase conversion current signal, and the W phase conversion current signal that are generated by the current input I/F 8, and the first rotation conversion signal that is input from the first rotation angle input I/F 20a in the main control unit F1.

In other words, the first microcomputer 1a6 in the main control unit F1 feedback controls the motor 6 based on the steering torque that is detected by the steering torque detection unit 16, a U phase drive current, a V phase drive current and a W phase drive current that are detected by the current detection unit 7, and a rotation angle detected by the rotation angle detection unit 19.

More specifically, the first microcomputer 1a6 calculates a target current from the first torque conversion signal, and obtains the U phase drive current, the V phase drive current, and the W phase drive current from the U phase conversion current signal, the V phase conversion current signal, and the W phase conversion current signal that are input from the current input I/F 8.

The first microcomputer 1a6 calculates a detected drive current value by using the first rotation conversion signal which shows the rotation angle of the motor 6, and the U phase drive current, the V phase drive current, and the W phase drive current that are transmitted through the motor 6. The first microcomputer 1a6 generates the gate control signal S1 to S6 so that a variance between the target current and the detected drive current value is "zero".

The second microcomputer 1b6 generates the gate control signal S1 to S6 based on the second torque conversion signal that is input from the second steering torque input I/F 17b, the U phase conversion current signal, the V phase conversion current signal, and the W phase conversion current signal that are input from the current input I/F 8, and the second rotation conversion signal that is input from the second rotation angle input I/F 20b when the auxiliary control unit F2 controls the motor 6, instead of the main control unit F1.

In other words, similar to the in first microcomputer 1a6 in the main control unit F1, the second microcomputer 1b6 in the auxiliary control unit F2 feedback controls the motor 6 based on the steering torque that is detected by the steering torque detection unit 16, the U phase drive current, the V phase drive current, and the W phase drive current that are detected by the current detection unit 7, and the rotation angle detected by the rotation angle detection unit 19.

More specifically, second microcomputer 1b6 calculates a target current from the second torque conversion signal, and obtains a U phase drive current, a V phase drive current, and a W phase drive current based on the U phase conversion current signal, the V phase conversion current signal, and the W phase conversion current signal that are input from the current input I/F 8.

The second microcomputer 1b6 calculates a detected drive current value by using the second rotation conversion signal which shows the rotation angle of the motor 6, and the U phase drive current, the V phase drive current, and the W phase drive current that are transmitted through the motor 6. The second microcomputer 1b6 generates the gate control signal S1 to S6 so that a variance between the target current and the detected drive current value is "zero".

The first switch control unit 4a6 in the main control unit F1 generates the first switching signal so that the first signal cut off switch 3a is set to a cut off state, when an abnormality occurs in at least one of the first steering torque input I/F 17a or the first rotation angle input I/F 20a. Along with the aforementioned, a signal that shows that the first signal cut off switch 3a is in a cut off state is input to the second microcomputer 1b6. With the aforementioned as a trigger, the second switch control unit 4b6 in the auxiliary control unit F2 outputs the second switching signal, which sets the second signal cut off switch 3b to a transmission state, to the first microcomputer 1a6 in the main control unit F1.

The second switch control unit 4b6 in the auxiliary control unit F2 generates the second switching signal so that the second signal cut off switch 3b is set to a cut off state, when an abnormality occurs in at least one of the second steering torque input I/F 17b or the second rotation angle input I/F 20b. Along with the aforementioned, a signal that shows that the second signal cut off switch 3b is in a cut off state is input to the first microcomputer 1a6. With the aforementioned as a trigger, the first switch control unit 4a6 in the main control unit F1 outputs the first switching signal, which sets the first signal cut off switch 3a to a transmission state, to the second microcomputer 1b6 in the auxiliary control unit F2.

In other words, the first microcomputer 1a6 in the main control unit F1 recognizes output states (output/no output) of the gate signals Sg1 to Sg6 from the auxiliary control unit F2 to the motor drive circuit 5. The second microcomputer 1b6 in the auxiliary control unit F2 recognizes output states (output/no output) of the gate signals Sg1 to Sg6 from the main control unit F1 to the motor drive circuit 5.

As such, according to the seventh embodiment, the motor 6 is feedback controlled based on the steering torque, the U phase drive current, the V phase drive current, and the W phase drive current, as well as the rotation angle of the motor 6. As such, it is possible to control the motor 6 with high accuracy. Therefore, according to the seventh embodiment, it is possible to properly realize a more appropriate assist to a steering torque that affects steering of an automobile operator.

The electric power steering device according to the seventh embodiment further includes the steering torque detection unit 16 which detects the steering torque of steering of the automobile operator, the first steering torque input I/F 17a that converts the detected torque signal detected by the steering torque detection unit 16 to the first torque conversion signal, and inputs the first torque conversion signal to the first control signal generator, the first steering torque input I/F monitoring unit 18a that determines the presence or absence of an abnormality occurrence in the first steering torque input I/F 17a, the second steering torque input I/F 17b that converts the detected torque signal that is detected by the steering torque detection unit 16 to the second torque conversion signal, and inputs the second torque conversion signal to the second control signal generator, and the second steering torque input I/F monitoring unit 18b that determines the presence or absence of an abnormality occurrence in the second steering torque input I/F 17b. The first switcher 100b cuts off output of the drive signal based on the first control signal to the motor drive circuit 5, when the first steering torque input I/F monitoring unit 18a determines that an abnormality occurred in the first steering torque input I/F 17a. The second switcher 100c cuts off output of the drive signal based on the second control signal to the motor drive circuit 5, when the second steering torque input I/F monitoring unit 18b determines that an abnormality occurred in the second steering torque input I/F 17b.

The electric power steering device according to the seventh embodiment further includes the rotation angle detection unit 19 that detects the rotation angle of the motor 6, the first rotation angle input I/F 20a that converts the detected rotation angle signal detected by the rotation angle detection unit 19 to the first rotation conversion signal, and inputs the first rotation conversion signal to the first control signal generator, the first rotation angle input I/F monitoring unit 21a that determines the presence or absence of an abnormality occurrence in the first rotation angle input I/F 20a, the second rotation angle input I/F 20b that converts the detected rotation angle signal that is detected by the rotation angle detection unit 19 to the second rotation conversion signal, and inputs the second rotation conversion signal to the second control signal generator, and the second rotation angle input I/F monitoring unit 21b that determines the presence or absence of an abnormality occurrence in the second rotation angle input I/F 20b. The first switcher 100b cuts off output of the drive signal based on the first control signal to the motor drive circuit 5, when the first rotation angle input I/F monitoring unit 21a determines that an abnormality occurred in the first rotation angle input I/F 20a. The second switcher 100c cuts off output of the drive signal based on the second control signal to the motor drive circuit 5, when the second rotation angle input I/F monitoring unit 21b determines that an abnormality occurred in the second rotation angle input I/F 20b.

In the present embodiment, the first signal cut off switch 3a is controlled based on an abnormality occurrence at the first steering torque input I/F 17a or the first rotation angle input I/F 20a, and the second signal cut off switch 3b is controlled based on an abnormality occurrence at the second steering torque input I/F 17b or the second rotation angle input I/F 20b. Since the first microcomputer 1a6 in the main control unit F1 recognizes the output state (output/no output) of the gate signals Sg1 to Sg6 in the auxiliary control unit F2, and the second microcomputer 1b6 in the auxiliary control unit F2 recognizes the output state (output/no output) of the gate signals Sg1 to Sg6 in the main control unit F1, it is possible to further increase stability against abnormality occurrences.

The technical scope of the present embodiment is not limited to the previously mentioned embodiments, and various changes that do not depart from the technical scope are possible.

For example, the motor control device 100 may be used to control a motor other than the motor of the electric power steering device.

The first control signal generator and the second control signal generator need not be microcomputers. For example, the first control signal generator and the second control signal generator may be a configuration where each has a storage unit, a processor or the like that are mounted on a circuit board as a separate entities.

The first drive signal processor and the second drive signal processor do not need an IC as a pre-driver, and may be a configuration that consists of a plurality of components that are mounted on a circuit board.

The drive current detector 100a may be realized in a configuration other than a configuration of the current detection unit 7 and the current input I/F 8.

The first switcher 100b may be realized in a configuration other than a configuration of the first signal cut off switch 3a and the first switch control unit 4a. Similarly the second switcher 100c may be realized in a configuration other than a configuration of the second signal cut off switch 3b and the second switch control unit 4b.

The motor 6 need not be a three phase direct current electric motor.

The previously mentioned embodiments and/or examples may be appropriately combined.

### [Reference Sign List]

1a, 1a2, 1a3, 1a4, 1a6...First Microcomputer, 1b, 1b2, 1b3, 1b4, 1b5, 1b6... Second Microcomputer, 2a, 2a3...First Pre-Driver, 2b, 2b3... Second Pre-Driver, 5... Motor Drive, 6...Motor, 11a...First Power Supply, 11b...Second Power Supply, 12a...First Power Supply Monitoring Unit, 12b... Second Power Supply Monitoring Unit, 13a...First Pre-Driver Monitoring Unit, 13b... Second Pre-Driver Monitoring Unit, 14a...First Current Input I/F Monitoring Unit, 14b... Second Current Input I/F Monitoring Unit, 15...Motor Terminal Condition Detection, 16... Steering Torque Detection, 17a... First Steering Torque Input I/F, 17b... Second Steering Torque Input I/F, 18a...First Steering Torque Input I/F Monitoring Unit, 18b... second steering torque input I/F monitoring unit, 19...Rotation Angle Detection, 20a...First Rotation Angle Input I/F, 20b...Second Rotation Angle Input I/F, 21a...First Rotation Angle Input I/F Monitoring Unit, 21b ... Second Rotation Angle Input I/F Monitoring Unit, 100...Motor Control, 100a...Drive Current Detector, 100b...First Switcher, 100c...Second Switcher, A1~D1,F1...Main Control, A2~F2...Auxiliary Control

## Claims

1. A motor control device (100) comprising:
a motor drive circuit (5) that outputs a drive current to a motor (6);
a drive current detector (100a) that detects the drive current;
a main control unit (A1, B1, C1, D1, F1), and
an auxiliary control unit (A2, B2, C2, D2, E2, F2), wherein
the motor drive circuit (5): is driven based on a drive signal (Sg1, Sg2, Sg3, Sg4, Sg5, Sg6) that is output from the main control unit (A1, B1, C1, D1, F1) or the auxiliary control unit(A2, B2, C2, D2, E2, F2), and
includes a plurality of switching elements (Q1, Q2, Q3, Q4, Q5, Q6), and the motor (6) is driven by having each of the switching elements (Q1, Q2, Q3, Q4, Q5, Q6) switch between supply and cut off of the drive current to the motor (6),
the main control unit (A1, B1, C1, D1, F1) has:
a first control signal generator (1a, 1a2, 1a3, 1a4, 1a5, 1a6) that generates first gate control signals (S1, S2, S3, S4, S5, S6) based on a detected current signal that is input from the drive current detector(100a); and
the auxiliary control unit (A2, B2, C2, D2, E2, F2) has:
a second control signal generator (1b, 1b2, 1b3, 1b4, 1b5, 1b6) that generates second gate control signals (S1, S2, S3, S4, S5, S6) based on a detected current signal that is input from the drive current detector (100a);
the motor control device (100) has:
a first control signal generator monitoring unit (10a) that monitors an operation state of the first control signal generator (1a2), and outputs a first abnormality signal to the first switcher (100b) and the second control signal generator (1b2) when the first control signal generator monitoring unit (10a) determines that an abnormality is occurring in the first control signal generator (1a2), and
a second control signal generator monitoring unit (10b) that monitors an operation state of the second control signal generator (1b2), and outputs a second abnormality signal to the second switcher (100c) and the first control signal generator (1a2) when the second control signal generator monitoring unit (10b) determines that an abnormality is occurring in the second control signal generator (1b2), wherein
the gate signals (Sg1, Sg2, Sg3, Sg4, Sg5, Sg6) are output to the motor drive circuit (5) from a control unit having no abnormality out of the main control unit (B1) and the auxiliary control unit(B2), and
a first drive signal generator monitoring unit (13a) that monitors an operation state of the first drive signal generator (2a3), and outputs a first drive abnormality signal to the first switcher (100b) and the second control signal generator (1b3) when the first drive signal generator monitoring unit (13a) determines that an abnormality is occurring in the first drive signal generator (2a3), and
a second drive signal generator monitoring unit (13b) that monitors an operation state of the second drive signal generator (2b3), and outputs a second drive abnormality signal to the second switcher (100c) and the first control signal generator (1a3) when the second drive signal generator monitoring unit (13b) determines that an abnormality is occurring in the second drive signal generator (2b3), wherein
the gate signals (Sg1, Sg2, Sg3, Sg4, Sg5, Sg6) are output to the motor drive circuit (5) from a control unit having no abnormality out of the main control unit (C1) and the auxiliary control unit (C2), and
the motor control device (100)
**characterized in that**
the main control unit (A1, B 1, C 1, D 1, F 1) further comprises:
a first drive signal generator (2a, 2a3) that generates first gate signals based on the first gate control signals at voltages high enough to operate the switching elements based on the gate control signals, and
a first switcher (100b) configured by first signal cut off switches and a first switch control unit (4a), the first switcher switching an output state of the first gate signals to the motor drive circuit (5), and
the auxiliary control unit (A2, B2, C2, D2, E2, F2) further comprises:
a second drive signal generator (2b, 2b2, 2b3) that generates second gate signals based on the second gate control signals at voltages high enough to operate the switching elements based on the second gate control signals, and
a second switcher (100c) configured by second signal cut off switches (3b) and a second switch control unit (4b), the second switcher switching an output state of the second gate signals to the motor drive circuit (5).

2. The motor control device (100) according to claim 1 further comprising:
a first power supply (11a) that supplies operation power to the first control signal generator (1a3, 1a4) and the first drive signal generator (2a3);
a second power supply (11b) that supplies operation power to the second control signal generator (1b3, 1b4) and the second drive signal generator(2b3);
a first power supply monitoring unit (12a) that monitors an operation state of the first power supply (11a), and outputs a first power supply abnormality signal to the first switcher (100b) and the second control signal generator (1b3, 1b4) when the first power supply monitoring unit (12a) determines that an abnormality is occurring in the first power supply(11a), and
a second power supply monitoring unit (12b) that monitors an operation state of the second power supply (11b), and outputs a second power supply abnormality signal to the second switcher (100c) and the first control signal generator (1a3, 1a4) when the second power supply monitoring unit (12b) determines that an abnormality is occurring in the second power supply (11b), wherein
the gate signals (Sg1, Sg2, Sg3, Sg4, Sg5, Sg6) is output to the motor drive circuit (5) from a control unit having no abnormality out of the main control unit (C1, D1) and the auxiliary control unit (C2, D2).

3. The motor control device (100) according to claim 1 or 2 further comprising:
a first detector monitoring unit (14a) that is provided in the main control unit (C1, D1), that monitors an operation state of the drive current detector (100a), and that outputs a first current detection abnormality signal to the first switcher (100b) and the second control signal generator (1b3, 1b4) when the first detector monitoring unit (14a) determines that an abnormality is occurring in the drive current detector(100a), and
a second detector monitoring unit (14b) that is provided in the auxiliary control unit (C2, D2), that monitors an operation state of the drive current detector (100a), and that outputs a second current detection abnormality signal to the second switcher (100c) and the first control signal generator (1a3, 1a4) when the second detector monitoring unit (14b) determines that an abnormality is occurring in the drive current detector (100a).

4. The motor control device (100) according to any one of claims 1 to 3, wherein:
the main control unit (D1, F1) outputs the first gate signals (Sg1, Sg2, Sg3, Sg4, Sg5, Sg6) to the motor drive circuit (5) via the first switcher (100b) only when the second switcher (100c) does not output the second gate signals (Sg1, Sg2, Sg3, Sg4, Sg5, Sg6) to the motor drive circuit (5), and
the auxiliary control unit (D2, F2) outputs the second gate signals (Sg1, Sg2, Sg3, Sg4, Sg5, Sg6) to the motor drive circuit (5) via the second switcher (100c) only when the first switcher (100b) does not output the first gate signals (Sg1, Sg2, Sg3, Sg4, Sg5, Sg6) to the motor drive circuit (5).

5. The motor control device (100) according to any one of claims 1 to 4 further comprising:
a motor terminal state detection unit (15) that detects a state of an input terminal of the motor (6) as a motor terminal state, wherein
the second control signal generator (1b5) determines potential failure of the auxiliary control unit (E2) by referencing the motor terminal state.

6. The motor control device (100) according to any one of claims 1 to 5, wherein
the second control signal generator (1b) has a lower computing power than the first control signal generator(1a).

7. An electric power steering device comprising:
the motor control device (100) according to any one of claims 1 to 6;
the motor (6) which generates an assist torque to assist a steering torque of steering of an operator.

8. The electric power steering device according to claim 7 further comprising:
a steering torque detection unit (16) which detects the steering torque;
a first steering torque input I/F (17a) that converts a detected torque signal that is detected by the steering torque detection unit (16) to a first torque conversion signal, and inputs the first torque conversion signal to the first control signal generator (1a6);
a first steering torque input I/F monitoring unit (18a) that determines the presence or absence of an abnormality occurrence in the first steering torque input I/F(17a);
a second steering torque input I/F (17b) that converts the detected torque signal that is detected by the steering torque detection unit (16) to a second torque conversion signal, and inputs the second torque conversion signal to the second control signal generator (1b6), and
a second steering torque input I/F monitoring unit (18b) that determines the presence or absence of an abnormality occurrence in the second steering torque input I/F(17b), wherein
the first switcher (100b) cuts off output of the first gate signals (Sg1, Sg2, Sg3, Sg4, Sg5, Sg6) based on the first gate control signals (S1, S2, S3, S4, S5, S6) to the motor drive circuit (5), when the first steering torque input I/F monitoring unit (18a) determines that an abnormality occurred in the first steering torque input I/F (17a), and
the second switcher (100c) cuts off output of the second gate signals (Sg1, Sg2, Sg3, Sg4, Sg5, Sg6) based on the second gate control signals (S1, S2, S3, S4, S5, S6) to the motor drive circuit (5), when the second steering torque input I/F monitoring unit (18b) determines that an abnormality occurred in the second steering torque input I/F (17b).

9. The electric power steering device according to claim 7 or 8 further comprising:
a rotation angle detection unit (19) that detects the rotation angle of the motor (6);
a first rotation angle input I/F (20a) that converts a detected rotation angle signal detected by the rotation angle detection unit (19) to a first rotation conversion signal, and inputs the first rotation conversion signal to the first control signal generator (1a6);
a first rotation angle input I/F monitoring unit (21a) that determines the presence or absence of an abnormality occurrence in the first rotation angle input I/F (20a);
a second rotation angle input I/F (20b) that converts the detected rotation angle signal that is detected by the rotation angle detection unit (19) to a second rotation conversion signal, and inputs the second rotation conversion signal to the second control signal generator (1b6), and
a second rotation angle input I/F monitoring unit (21b) that determines the presence or absence of an abnormality occurrence in the second rotation angle input I/F (20b), wherein
the first switcher (100b) cuts off output of the first gate signals (Sg1, Sg2, Sg3, Sg4, Sg5, Sg6) based on the first gate control signals (S1, S2, S3, S4, S5, S6) to the motor drive circuit (5), when the first rotation angle input I/F monitoring unit (21a) determines that an abnormality occurred in the first rotation angle input I/F (20a), and
the second switcher (100c) cuts off output of the second gate signals (Sg1, Sg2, Sg3, Sg4, Sg5, Sg6) based on the second gate control signals (S1, S2, S3, S4, S5, S6) to the motor drive circuit (5), when the second rotation angle input I/F monitoring unit (21b) determines that an abnormality occurred in the second rotation angle input I/F(20b).

## Patentansprüche

1. Motorsteuervorrichtung (100) umfassend:
eine Motorantriebsschaltung (5), die einen Antriebsstrom an einen Motor (6) ausgibt;
einen Antriebsstromdetektor (100a), der den Antriebsstrom detektiert;
eine Hauptsteuereinheit (A1, B1, C1, D1, F1), und
eine Hilfssteuereinheit (A2, B2, C2, D2, E2, F2), wobei
die Motorantriebsschaltung (5):
angetrieben wird, basierend auf einem Antriebssignal (Sgl, Sg2, Sg3, Sg4, Sg5, Sg6), das von der Hauptsteuereinheit (A1, B1, C1, D1, F1) oder der Hilfssteuereinheit (A2, B2, C2, D2, E2, F2) ausgegeben wird, und
umfasst, eine Vielzahl von Schaltelementen (Q1, Q2, Q3, Q4, Q5, Q6), und der Motor (6) angetrieben wird, indem jedes der Schaltelemente (Q1, Q2, Q3, Q4, Q5, Q6) zwischen Bereitstellung und Trennung des Antriebsstroms an den Motor (6) geschaltet werden,
die Hauptsteuereinheit (A1, B1, C1, D1, F1) aufweist:
einen ersten Steuersignalgenerator (1a, 1a2, 1a3, 1a4, 1a5, 1a6), der erste Gate-Steuersignale (S1, S2, S3, S4, S5, S6) basierend auf einem detektierten Stromsignal erzeugt, das vom Antriebsstromdetektor (100a) eingegeben wird;
die Hilfssteuereinheit (A2, B2, C2, D2, E2, F2) aufweist:
einen zweiten Steuersignalgenerator (1b, 1b2, 1b3, 1b4, 1b5, 1b6), der zweite Gate-Steuersignale (S1, S2, S3, S4, S5, S6) basierend auf einem detektierten Stromsignal erzeugt, das von dem Antriebsstromdetektor (100a) eingegeben wird;
die Motorsteuervorrichtung (100) aufweist:
eine erste Steuersignalgeneratorüberwachungseinheit (10a), die einen Betriebszustand des ersten Steuersignalgenerators (1a2) überwacht, und ein erstes Abnormalitätssignal an den ersten Schalter (100b) und den zweiten Steuersignalgenerator (1b2) ausgibt, wenn die erste Steuersignalgeneratorüberwachungseinheit (10a) bestimmt, dass eine Abnormalität in dem ersten Steuersignalgenerator (1a2) aufgetreten ist, und
eine zweite Steuersignalgeneratorüberwachungseinheit (10b), die einen Betriebszustand des zweiten Steuersignalgenerators (1b2) überwacht, und ein zweites Abnormalitätssignal an den zweiten Schalter (100c) und den ersten Steuersignalgenerator (1a2) ausgibt, wenn die zweite Steuersignalgeneratorüberwachungseinheit (10b) bestimmt, dass eine Abnormalität in dem zweiten Steuersignalgenerator (1b2) aufgetreten ist, wobei
die Gate-Signale (Sgl, Sg2, Sg3, Sg4, Sg5, Sg6) an die Motorantriebsschaltung (5) von einer Steuereinheit unter der Hauptsteuereinheit (B1) und der Hilfssteuereinheit (B2) ausgegeben werden, die keine Abnormalität aufweist, und
eine erste Antriebssignalüberwachungseinheit (13a), die einen Betriebszustand des ersten Antriebssignalgenerators (2a3) überwacht, und ein erstes Antriebsabnormalitätssignal an den ersten Schalter (100b) und den zweiten Steuersignalgenerator (1b3) ausgibt, wenn die erste Antriebssignalgeneratorüberwachungseinheit (10a) bestimmt, dass eine Abnormalität in dem ersten Antriebssignalgenerator (2a3) aufgetreten ist, und
eine zweite Antriebssignalgeneratorüberwachungseinheit (13b), die einen Betriebszustand des zweiten Antriebssignalgenerators (2b3) überwacht, und ein zweites Antriebsabnormalitätssignal an den zweiten Schalter (100b) und den ersten Steuersignalgenerator (1a3) ausgibt, wenn die zweite Antriebssignalgeneratorüberwachungseinheit (13b) bestimmt, dass eine Abnormalität in dem zweiten Antriebssignalgenerator (2b3) aufgetreten ist, wobei
die Gate-Signale (Sgl, Sg2, Sg3, Sg4, Sg5, Sg6) an die Motorantriebsschaltung (5) von einer Steuereinheit unter der Hauptsteuereinheit (C1) und der Hilfssteuereinheit (C2) ausgegeben werden, die keine Abnormalität aufweist, und
die Motorsteuervorrichtung (100)
**dadurch gekennzeichnet ist, dass**
die Hauptsteuereinheit (A1, B1, C1, D1, F1) ferner umfasst:
einen ersten Antriebssignalgenerator (2a, 2a3), der erste Gate-Signale basierend auf den ersten Gate-Steuersignalen bei Spannungen erzeugt, die hoch genug sind, um die Schaltelemente basierend auf den Gate-Steuersignalen zu betreiben, und
einen ersten Schalter (100b), der durch erste Signaltrennschalter und eine erste Schaltsteuereinheit (4a) konfiguriert ist, wobei der erste Schalter einen Ausgangszustand der ersten Gate-Signale zu der Motorantriebsschaltung (5) schaltet, und
die Hilfssteuereinheit (A2, B2, C2, D2, E2, F2) ferner umfasst:
einen zweiten Antriebssignalgenerator (2b, 2b2, 2b3), der zweite Gate-Signale basierend auf den zweiten Gate-Steuersignalen bei Spannungen erzeugt, die hoch genug sind, um die Schaltelemente basierend auf den zweiten Gate-Steuersignalen zu betreiben, und
einen zweiten Schalter (100c), der durch zweite Signaltrennschalter (3b) und eine zweite Schaltsteuereinheit (4b) konfiguriert ist, wobei der zweite Schalter einen Ausgangszustand der zweiten Gate-Signale an die Motorantriebsschaltung (5) schaltet.

2. Motorsteuervorrichtung (100) nach Anspruch 1, ferner umfassend:
eine erste Leistungsversorgung (11a), die eine Betriebsleistung and den ersten Steuersignalgenerator (1a3, 1a4) und den ersten Antriebssignalgenerator (2a3) bereitstellt;
eine zweite Leistungsversorgung (11b), die eine Betriebsleistung an den zweiten Steuersignalgenerator (1b3, 1b4) und den zweite Antriebssignalgenerator (2b3) bereitstellt;
eine erste Leistungsversorgungsüberwachungseinheit (12a), die eine Betriebszustand der ersten Leistungsversorgung (11a) überwacht, und ein erstes Leistungsversorgungsabnormalitätssignal an den ersten Schalter (100b) und den zweiten Steuersignalgenerator (1b3, 1b4) ausgibt, wenn die erste Leistungsversorgungsüberwachungseinheit (12a) bestimmt, dass eine Abnormalität in der ersten Leistungsversorgung (11a) aufgetreten ist, und
eine zweite Leistungsversorgungsüberwachungseinheit (12b), die einen Betriebszustand der zweite Leistungsversorgung (11b) überwacht, und ein zweites Leistungsversorgungsabnormalitätssignal an den zweiten Schalter (100c) und den ersten Steuersignalgenerator (1a3, 1a4) ausgibt, wenn die zweite Leistungsversorgungsüberwachungseinheit (12b) bestimmt, dass eine Abnormalität in der zweiten Leistungsversorgung (11b) aufgetreten ist, wobei
die Gate-Signale (Sgl, Sg2, Sg3, Sg4, Sg5, Sg6) an die Motorantriebsschaltung (5) von einer Steuereinheit aus der Hauptsteuereinheit (C1, D1) und der Hilfssteuereinheit (C2, D2) ausgegeben wird, die keine Abnormalität aufweist.

3. Motorsteuervorrichtung (100) nach Anspruch 1 oder 2, ferner umfassend:
eine erste Detektorüberwachungseinheit (14a), die in der Hauptsteuereinheit (C1, D1) bereitgestellt ist, die einen Betriebszustand des Antriebsstromdetektors (100a) überwacht, und die ein erstes Stromdetektionsabnormalitätssignal an den ersten Schalter (100b) und den zweiten Steuersignalgenerator (1b3, 1b4) ausgibt, wenn die erste Detektorüberwachungseinheit (14a) bestimmt, dass eine Abnormalität in dem Antriebsstromdetektor (100a) aufgetreten ist, und
eine zweite Detektorüberwachungseinheit (14b), die in der Hilfssteuervorrichtung (C2, D2) bereitgestellt ist, di einen Betriebszustand des Antriebsstromdetektors (100a) überwacht, und die ein zweites Stromdetektionsabnormalitätssignal an den zweiten Schalter (10c) und den ersten Steuersignalgenerator (1a3, 1a4) ausgibt, wenn die zweite Detektorüberwachungseinheit (14b) bestimmt, dass eine Abnormalität in dem Antriebsstromdetektor (100a) aufgetreten ist.

4. Motorsteuervorrichtung (100) nach einem der Ansprüche 1 bis 3, wobei:
die Hauptsteuereinheit (D1, F1) die ersten Gate-Signale (Sgl, Sg2, Sg3, Sg4, Sg5, Sg6) and die Motorantriebsschaltung (5) über den ersten Schalter (100b) nur ausgibt, wenn der zweite Schalter (100c) die zweiten Gate-Signale (Sgl, Sg2, Sg3, Sg4, Sg5, Sg6) nicht an die Motorantriebsschaltung (5) ausgibt, und
die Hilfssteuereinheit (D2, F2) die zweiten Gate-Signale (Sgl, Sg2, Sg3, Sg4, Sg5, Sg6) an die Motorantriebsschaltung (5) über den zweiten Schalter (100c) nur ausgibt, wenn der erste Schalter (100b) die ersten Gate-Signale (Sgl, Sg2, Sg3, Sg4, Sg5, Sg6) nicht an die Motorantriebsschaltung (5) ausgibt.

5. Motorsteuervorrichtung (100) nach einem der Ansprüche 1 bis 4, ferner umfassend:
eine Motoranschlusszustandsdetektionseinheit (15), die einen Zustand eines Eingangsanschlusses des Motors (6) als einen Motoranschlusszustand detektiert, wobei
der zweite Steuersignalgenerator (1b5) einen möglichen Ausfall der Hilfssteuervorrichtung (E2) durch Bezugnahme auf den Motoranschlusszustand bestimmt.

6. Motorsteuervorrichtung (100) nach einem der Ansprüche 1 bis 5, wobei
der zweite Steuersignalgenerator (1b) eine niedrigere Rechenleistung als der erste Steuersignalgenerator (1a) aufweist.

7. Elektrische Servolenkungsvorrichtung umfassend:
die Motorsteuervorrichtung (100) nach einem der Ansprüche 1 bis 6;
den Motor (6), der ein Unterstützungsdrehmoment zum Unterstützen eines Lenkdrehmoments eines Lenkens eines Bedieners erzeugt.

8. Elektrische Servolenkungsvorrichtung nach Anspruch 7, ferner umfassend:
eine Lenkdrehmomentdetektionseinheit (16), die das Lenkdrehmoment detektiert;
eine erste Lenkdrehmomenteingabeschnittstelle (17a), die ein detektiertes Lenkdrehmoment, das durch die Lenkdrehmomentdetektionseinheit (16) detektiert ist, in ein erstes Drehmomentkonvertierungssignal konvertiert, und das erste Drehmomentkonvertierungssignal an den ersten Steuersignalgenerator (1a6) eingibt;
eine erste Lenkdrehmomenteingabeschnittstellenüberwachungseinheit (18a), die die Anwesenheit oder Abwesenheit einer in der ersten Lenkdrehmomenteingabeschnittstelle (17a) auftretenden Abnormalität bestimmt;
eine zweite Lenkdrehmomenteingabeschnittstelle (17b), die das detektierte Drehmomentsignal, das durch die Lenkdrehmomentdetektionseinheit (16) detektiert ist, in ein zweites Drehmomentkonvertierungssignal konvertiert, und das zweite Drehmomentkonvertierungssignal an den zweiten Steuersignalgenerator (1b6) eingibt, und
eine zweite Lenkdrehmomenteingabeschnittstellenüberwachungseinheit (18b), die die Anwesenheit oder Abwesenheit einer in der zweiten Lenkdrehmomenteingabeschnittstelle (17b) auftretenden Abnormalität bestimmt, wobei
der erste Schalter (100b) die ersten Gate-Signale (Sgl, Sg2, Sg3, Sg4, Sg5, Sg6) basierend auf den ersten Gate-Steuersignalen (S1, S2, S3, S4, S5, S5) zu der Motorantriebsschaltung (5) trennt, wenn die erste Lenkdrehmomenteingabeschnittstellenüberwachungseinheit (18a) bestimmt, dass eine Abnormalität in der ersten Lenkdrehmomenteingabeschnittstelle (17a) aufgetreten ist, und
der zweite Schalter (100c) die zweiten Gate-Signale (Sgl, Sg2, Sg3, Sg4, Sg5, Sg6) basierend auf den zweiten Gate-Steuersignalen (S1, S2, S3, S4, S5, S6) zu der Motorantriebssteuerung (5) trennt, wenn die zweite Lenkdrehmomenteingabeschnittstellenüberwachungseinheit (18b) bestimmt, dass eine Abnormalität in der zweiten Lenkdrehmomenteingabeschnittstelle (17b) aufgetreten ist.

9. Elektrische Servolenkungsvorrichtung nach Anspruch 7 oder 8, ferner umfassend:
eine Rotationswinkeldetektionseinheit (19), die einen Rotationswinkel des Motors (6) detektiert;
eine erste Rotationswinkeleingabeschnittstelle (20a), die ein erkanntes Rotationswinkelsignal, das durch die Rotationswinkeldetektionseinheit (19) detektiert ist, in ein erstes Rotationskonvertierungssignal konvertiert, und das erste Rotationskonvertierungssignal an den ersten Steuersignalgenerator (1a6) eingibt;
eine erste Rotationswinkeleingabeschnittstellenüberwachungseinheit (21a), die die Anwesenheit oder Abwesenheit einer in der ersten Rotationswinkeleingabeschnittstelle (20a) auftretenden Abnormalität bestimmt;
eine zweite Rotationswinkeleingabeschnittstelle (20b) die das detektierte Rotationswinkelsignal, das durch die Rotationswinkeldetektionseinheit (19) detektiert ist, in ein zweites Rotationskonvertierungssignal konvertiert, und das zweite Rotationskonvertierungssignal an den zweiten Steuersignalgenerator (1b6) ausgibt, und
eine zweite Rotationswinkeleingabeschnittstellenüberwachungseinheit (21b), die die Anwesenheit oder Abwesenheit einer in der zweiten Rotationswinkeleingabeschnittstelle (20b) auftretenden Abnormalität bestimmt, wobei
der erste Schalter (100b) die ersten Gate-Signale (Sgl, Sg2, Sg3, Sg4, Sg5, Sg6) basierend auf den ersten Gate-Steuersignalen (S1, S2, S3, S4, S5, S6) zu der Motorantriebsschaltung (5) trennt, wenn die erste Rotationswinkeleingabeschnittstellenüberwachungseinheit (21a) bestimmt, dass eine Abnormalität in der ersten Rotationswinkeleingabeschnittstelle (20a) aufgetreten ist, und
der zweite Schalter (100c)die zweiten Gate-Signale (Sgl, Sg2, Sg3, Sg4, Sg5, Sg6) basierend auf den zweiten Gate-Steuersignalen (S1, S2, S3, S4, S5, S6) zu der Motorantriebssteuerung (5) trennt, wenn die zweite Rotationswinkeleingabeschnittstellenüberwachungseinheit (21b) bestimmt, dass eine Abnormalität in der zweiten Rotationswinkeleingabeschnittstelle (20b) aufgetreten ist.

## Revendications

1. Dispositif de commande de moteur (100) comprenant :
un circuit d'entraînement de moteur (5) qui délivre un courant d'entraînement à un moteur (6) ;
un détecteur de courant d'entraînement (100a) qui détecte le courant d'entraînement ;
une unité de commande principale (A1, B1, C1, D1, F1) ; et
une unité de commande auxiliaire (A2, B2, C2, D2, E2, F2), dans lequel
le circuit d'entraînement de moteur (5) :
est commandé sur la base d'un signal de commande (Sgl, Sg2, Sg3, Sg4, Sg5, Sg6) qui est émis par l'unité de commande principale (A1, B1, C1, D1, F1) ou l'unité de commande auxiliaire (A2, B2, C2, D2, E2, F2), et
comprend une pluralité d'éléments de commutation (Q1, Q2, Q3, Q4, Q5, Q6), et le moteur (6) est entraîné en faisant commuter chacun des éléments de commutation (Q1, Q2, Q3, Q4, Q5, Q6) entre l'alimentation et la coupure de courant d'entraînement vers le moteur (6),
l'unité de commande principale (A1, B1, C1, D1, F1) comprend :
un premier générateur de signal de commande (1a, 1a2, 1a3, 1a4, 1a5, 1a6) qui génère des premiers signaux de commande de porte (S1, S2, S3, S4, S5, S6) sur la base d'un signal de courant détecté qui est entré à partir du détecteur de courant d'entraînement (100a) ; et
l'unité de commande auxiliaire (A2, B2, C2, D2, E2, F2) comprend :
un deuxième générateur de signal de commande (1b, 1b2, 1b3, 1b4, 1b5, 1b6) qui génère des deuxièmes signaux de commande de porte (S1, S2, S3, S4, S5, S6) sur la base d'un signal de courant détecté qui est entré à partir du détecteur de courant d'entraînement (100a) ;
le dispositif de commande de moteur (100) comprend :
une unité de surveillance de premier générateur de signal de commande (10a) qui surveille un état de fonctionnement du premier générateur de signal de commande (1a2) et émet un premier signal d'anomalie vers le premier commutateur (100b) et le deuxième générateur de signal de commande (1b2) lorsque l'unité de surveillance de premier générateur de signal de commande (10a) détermine qu'une anomalie se produit dans le premier générateur de signal de commande (1a2), et
une unité de surveillance de deuxième générateur de signal de commande (10b) qui surveille un état de fonctionnement du deuxième générateur de signal de commande (1b2) et émet un deuxième signal d'anomalie vers le deuxième commutateur (100c) et le premier générateur de signal de commande (1a2) lorsque l'unité de surveillance de deuxième générateur de signal de commande (10b) détermine qu'une anomalie se produit dans le deuxième générateur de signal de commande (1b2), dans lequel
les signaux de porte (Sgl, Sg2, Sg3, Sg4, Sg5, Sg6) sont émis vers le circuit d'entraînement de moteur (5) à partir d'une unité de commande ne présentant aucune anomalie parmi l'unité de commande principale (B1) et l'unité de commande auxiliaire (B2), et
une unité de surveillance de premier générateur de signal d'entraînement (13a) qui surveille un état de fonctionnement du premier générateur de signal d'entraînement (2a3) et émet un premier signal d'anomalie d'entraînement vers le premier commutateur (100b) et le deuxième générateur de signal de commande (1b3) lorsque l'unité de surveillance de premier générateur de signal d'entraînement (13a) détermine qu'une anomalie se produit dans le premier générateur de signal d'entraînement (2a3), et
une unité de surveillance de deuxième générateur de signal d'entraînement (13b) qui surveille un état de fonctionnement du deuxième générateur de signal d'entraînement (2b3) et émet un deuxième signal d'anomalie d'entraînement vers le deuxième commutateur (100c) et le premier générateur de signal de commande (1a3) lorsque l'unité de surveillance de deuxième générateur de signal d'entraînement (13b) détermine qu'une anomalie se produit dans le deuxième générateur de signal d'entraînement (2b3), dans lequel
les signaux de porte (Sgl, Sg2, Sg3, Sg4, Sg5, Sg6) sont émis vers le circuit d'entraînement de moteur (5) à partir d'une unité de commande ne présentant aucune anomalie parmi l'unité de commande principale (C1) et l'unité de commande auxiliaire (C2), et
le dispositif de commande de moteur (100)
**caractérisé en ce que**
l'unité de commande principale (A1, B1, C1, D1, F1) comprend en outre :
un premier générateur de signal d'entraînement (2a, 2a3) qui génère des premiers signaux de porte sur la base des premiers signaux de commande de porte à des tensions suffisamment élevées pour actionner les éléments de commutation sur la base des signaux de commande de porte, et
un premier commutateur (100b) configuré par des commutateurs de coupure de premier signal et une unité de commande de premier commutateur (4a), le premier commutateur commutant un état de sortie des premiers signaux de porte vers le circuit d'entraînement de moteur (5), et
l'unité de commande auxiliaire (A2, B2, C2, D2, E2, F2) comprend en outre :
un deuxième générateur de signal d'entraînement (2b, 2b2, 2b3) qui génère des deuxièmes signaux de porte sur la base des deuxièmes signaux de commande de porte à des tensions suffisamment élevées pour actionner les éléments de commutation sur la base des deuxièmes signaux de commande de porte, et
un deuxième commutateur (100c) configuré par des commutateurs de coupure de deuxième signal (3b) et une unité de commande de deuxième commutateur (4b), le deuxième commutateur commutant un état de sortie des deuxièmes signaux de porte vers le circuit d'entraînement de moteur (5).

2. Le dispositif de commande de moteur (100) selon la revendication 1, comprenant en outre :
une première alimentation électrique (11a) qui fournit une alimentation électrique de fonctionnement au premier générateur de signal de commande (1a3, 1a4) et au premier générateur de signal d'entraînement (2a3) ;
une deuxième alimentation électrique (11b) qui fournit une alimentation électrique de fonctionnement au deuxième générateur de signal de commande (1b3, 1b4) et au deuxième générateur de signal d'entraînement (2b3) ;
une unité de surveillance de première alimentation électrique (12a) qui surveille un état de fonctionnement de la première alimentation électrique (11a) et émet un premier signal d'anomalie d'alimentation électrique vers le premier commutateur (100b) et le deuxième générateur de signal de commande (1b3, 1b4) lorsque l'unité de surveillance de première alimentation électrique (12a) détermine qu'une anomalie se produit dans la première alimentation électrique (11a), et
une unité de surveillance de deuxième alimentation électrique (12b) qui surveille un état de fonctionnement de la deuxième alimentation électrique (11b) et émet un deuxième signal d'anomalie d'alimentation électrique vers le deuxième commutateur (100c) et le premier générateur de signal de commande (1a3, 1a4) lorsque l'unité de surveillance de deuxième alimentation électrique (12b) détermine qu'une anomalie se produit dans la deuxième alimentation électrique (11b), dans lequel
les signaux de porte (Sgl, Sg2, Sg3, Sg4, Sg5, Sg6) sont émis vers le circuit d'entraînement de moteur (5) à partir d'une unité de commande ne présentant aucune anomalie parmi l'unité de commande principale (C1, D1) et l'unité de commande auxiliaire (C2, D2).

3. Le dispositif de commande de moteur (100) selon la revendication 1 ou 2, comprenant en outre :
une première unité de surveillance de détecteur (14a) qui est prévue dans l'unité de commande principale (C1, D1), qui surveille un état de fonctionnement du détecteur de courant d'entraînement (100a), et qui émet un premier signal d'anomalie de détection de courant vers le premier commutateur (100b) et le deuxième générateur de signal de commande (1b3, 1b4) lorsque la première unité de surveillance de détecteur (14a) détermine qu'une anomalie se produit dans le détecteur de courant d'entraînement (100a), et
une deuxième unité de surveillance de détecteur (14b) qui est prévue dans l'unité de commande auxiliaire (C2, D2), qui surveille un état de fonctionnement du détecteur de courant d'entraînement (100a), et qui émet un deuxième signal d'anomalie de détection de courant vers le deuxième commutateur (100c) et le premier générateur de signal de commande (1a3, 1a4) lorsque la deuxième unité de surveillance de détecteur (14b) détermine qu'une anomalie se produit dans le détecteur de courant d'entraînement (100a).

4. Dispositif de commande de moteur (100) selon l'une quelconque des revendications 1 à 3, dans lequel :
l'unité de commande principale (D1, F1) délivre les premiers signaux de porte (Sgl, Sg2, Sg3, Sg4, Sg5, Sg6) au circuit d'entraînement de moteur (5) via le premier commutateur (100b) uniquement lorsque le deuxième commutateur (100c) ne délivre pas les deuxièmes signaux de porte (Sgl, Sg2, Sg3, Sg4, Sg5, Sg6) au circuit d'entraînement de moteur (5), et
l'unité de commande auxiliaire (D2, F2) délivre les deuxièmes signaux de porte (Sgl, Sg2, Sg3, Sg4, Sg5, Sg6) au circuit d'entraînement de moteur (5) via le deuxième commutateur (100c) uniquement lorsque le premier commutateur (100b) ne délivre pas les premiers signaux de porte (Sgl, Sg2, Sg3, Sg4, Sg5, Sg6) au circuit d'entraînement de moteur (5).

5. Dispositif de commande de moteur (100) selon l'une quelconque des revendications 1 à 4, comprenant en outre :
une unité de détection d'état de borne de moteur (15) qui détecte un état d'une borne d'entrée du moteur (6) en tant qu'état de borne de moteur, dans lequel
le deuxième générateur de signal de commande (1b5) détermine une défaillance potentielle de l'unité de commande auxiliaire (E2) en se référant à l'état de borne de moteur.

6. Dispositif de commande de moteur (100) selon l'une quelconque des revendications 1 à 5, dans lequel
le deuxième générateur de signal de commande (1b) a une puissance de calcul inférieure à celle du premier générateur de signal de commande (1a).

7. Dispositif de direction assistée électrique comprenant :
le dispositif de commande de moteur (100) selon l'une quelconque des revendications 1 à 6 ;
le moteur (6) qui génère un couple d'assistance pour assister un couple de direction d'une direction d'un opérateur.

8. Dispositif de direction assistée électrique selon la revendication 7, comprenant en outre :
une unité de détection de couple de direction (16) qui détecte le couple de direction ;
une première interface d'entrée de couple de direction (17a) qui convertit un signal de couple détecté qui est détecté par l'unité de détection de couple de direction (16) en un premier signal de conversion de couple, et qui transmet le premier signal de conversion de couple au premier générateur de signal de commande (1a6) ;
une unité de surveillance de première interface d'entrée de couple de direction (18a) qui détermine la présence ou l'absence d'une occurrence d'anomalie dans la première interface d'entrée de couple de direction (17a) ;
une deuxième interface d'entrée de couple de direction (17b) qui convertit le signal de couple détecté qui est détecté par l'unité de détection de couple de direction (16) en un deuxième signal de conversion de couple, et qui transmet le deuxième signal de conversion de couple au deuxième générateur de signal de commande (1b6) ; et
une unité de surveillance de deuxième interface d'entrée de couple de direction (18b) qui détermine la présence ou l'absence d'une occurrence d'anomalie dans la deuxième interface d'entrée de couple de direction (17b), dans laquelle
le premier commutateur (100b) coupe une sortie des premiers signaux de porte (Sgl, Sg2, Sg3, Sg4, Sg5, Sg6) sur la base des premiers signaux de commande de porte (S1, S2, S3, S4, S5, S6) vers le circuit d'entraînement de moteur (5) lorsque l'unité de surveillance de première interface d'entrée de couple de direction (18a) détermine qu'une anomalie s'est produite dans la première interface d'entrée de couple de direction (17a), et
le deuxième commutateur (100c) coupe une sortie des deuxièmes signaux de porte (Sgl, Sg2, Sg3, Sg4, Sg5, Sg6) sur la base des deuxièmes signaux de commande de porte (S1, S2, S3, S4, S5, S6) vers le circuit d'entraînement de moteur (5), lorsque l'unité de surveillance de deuxième interface d'entrée de couple de direction (18b) détermine qu'une anomalie s'est produite dans la deuxième interface d'entrée de couple de direction (17b).

9. Dispositif de direction assistée électrique selon la revendication 7 ou 8, comprenant en outre :
une unité de détection d'angle de rotation (19) qui détecte l'angle de rotation du moteur (6) ;
une première interface d'entrée d'angle de rotation (20a) qui convertit un signal d'angle de rotation détecté qui est détecté par l'unité de détection d'angle de rotation (19) en un premier signal de conversion de rotation, et qui entre le premier signal de conversion de rotation dans le premier générateur de signal de commande (1a6) ;
une unité de surveillance de première interface d'entrée d'angle de rotation (21a) qui détermine la présence ou l'absence d'une occurrence d'anomalie dans la première interface d'entrée d'angle de rotation (20a) ;
une deuxième interface d'entrée d'angle de rotation (20b) qui convertit le signal d'angle de rotation détecté qui est détecté par l'unité de détection d'angle de rotation (19) en un deuxième signal de conversion de rotation, et qui entre le deuxième signal de conversion de rotation dans le deuxième générateur de signal de commande (1b6) ; et
une unité de surveillance de deuxième interface d'entrée d'angle de rotation (21b) qui détermine la présence ou l'absence d'une occurrence d'anomalie dans la deuxième interface d'entrée d'angle de rotation (20b), dans laquelle
le premier commutateur (100b) coupe une sortie des premiers signaux de porte (Sgl, Sg2, Sg3, Sg4, Sg5, Sg6) sur la base des premiers signaux de commande de porte (S1, S2, S3, S4, S5, S6) vers le circuit d'entraînement de moteur (5) lorsque l'unité de surveillance de première interface d'entrée d'angle de rotation (21a) détermine qu'une anomalie s'est produite dans la première interface d'entrée d'angle de rotation (20a), et
le deuxième commutateur (100c) coupe une sortie des deuxièmes signaux de porte (Sgl, Sg2, Sg3, Sg4, Sg5, Sg6) sur la base des deuxièmes signaux de commande de porte (S1, S2, S3, S4, S5, S6) vers le circuit d'entraînement de moteur (5), lorsque l'unité de surveillance de deuxième interface d'entrée d'angle de rotation (21b) détermine qu'une anomalie s'est produite dans la deuxième interface d'entrée d'angle de rotation (20b).
